# EUROPEAN PATENT APPLICATION

(11) **EP 2 172 945 A1**
(43) Date of publication of application: **07.04.2010**
(21) Application number: 08778205.8
(22) Date of filing: 16.07.2008
(51) Int. Cl.: H01B 1/06, G01N 27/406

(54) **SOLID ION-CONDUCTING MATERIAL, ELECTROCHEMICAL DEVICE UTILIZING THE SOLID ION-CONDUCTING MATERIAL, AND METHOD FOR PRODUCTION OF THE ELECTROCHEMICAL DEVICE**

(30) Priority: 19.07.2007 JP 2007188080; 06.08.2007 JP 2007204625; 04.09.2007 JP 2007229372; 20.11.2007 JP 2007300508
(71) Applicant: Gunze Limited, Ayabe-shi, Kyoto 623-8511 (JP)
(72) Inventor: HANE, Tomoko, Moriyama-shi Shiga 524-8501 (JP); KIYOHARA, Akio, Moriyama-shi Shiga 524-8501 (JP)
(74) Representative: Betten & Resch
(86) International application number: PCT/JP2008/062854
(87) International publication number: WO 2009/011368

(57) **Abstract**

Provided is a solid ion conductor which can be used suitably for an electrochemical device or a hydrogen gas sensor. An electrochemical device wherein a pair of electrodes are formed in the state that a solid ion conductor is sandwiched therebetween, the conductor being obtained by subjecting, to curing treatment with ultraviolet rays, a mixture of a photocurable resin and an ionic liquid having one or more cationic moieties selected from imidazolium based ions, pyridinium based ions, aliphatic amine based ions, alicyclic amine based ions and aliphatic phosphonium ions, and having one or more anionic moieties selected from boric acid ions, triflate ions, halogen based ions, and phosphonate ions.

## Description

### Technical Field

The present invention relates to a solid ion conductor, an electrochemical device using a solid ion conductor, a process for producing the same, and others.

### Background Art

Electrochemical devices, such as secondary batteries such as a lithium ion battery, electric double layer capacitors, and electrochromic displays, are each generally composed of: a pair of electrodes wherein two or more out of oxides, nitrides, and sulfides of metals or transition metals that can each undergo a reversible redox reaction, carbon and others are combined in the positive electrode and the negative electrode; and an ion conductor with which the gap therebetween is filled.

About, for example, a lithium ion battery, LiCoO₂ (lithium cobaltite) and C (carbon) are selected for its positive electrode and its negative electrode, respectively; a polyolefin porous film is used as its separator for separating the positive electrode and the negative electrode from each other; and an organic electrolytic solution containing Li ions of LiClO₄, LiPF₆ or the like is used as its ion conductor.

As an electrolytic solution of such a secondary battery, for example, Patent Document 1 discloses a structure using an ionic liquid made of a cyclic quaternary ammonium organic cation having an aromatic ring, a typical example of which is a 1-ethyl-3-methylimidazolium cation; Patent Document 2 suggests a battery using a nonaqueous electrolyte containing an ionic liquid made of an aliphatic quaternary ammonium organic cation, a typical example of which is a trimethylhexylammonium cation; and further Patent Document 3 discloses a nonaqueous electrolyte battery containing an ionic liquid made of a saturated aliphatic cyclic quaternary ammonium cation and an anion made only of a nonmetallic element, containing a cyclic carbonate and/or a linear carbonate, and further containing lithium cations in a concentration of 0.5 mol/L or more.

The ionic liquid is a stable salt of a liquid that generally has the following natures and other natures: the liquid salt has a vapor pressure of approximately zero, has flame resistance, and ionicity while the salt has a low viscosity and a high decomposition voltage. Therefore, attention is paid to the ionic liquid as an ion conductor suitable for articles for which a high-level stability is required.

An example of electrochemical devices is a hydrogen gas sensor.
The necessity of the hydrogen gas sensor, through which the concentration of hydrogen is detected with a good precision, is very high in order that a hydrogen energy system, a typical example of which is a fuel battery, may be constructed. Hitherto, hydrogen gas sensors as described in Patent Documents 4 to 6 have been disclosed.

Patent Document 4 discloses the following hydrogen sensor as a hydrogen gas sensor which is not required to receive high temperature at its sensing unit at the time of measuring the concentration of hydrogen in a gas phase or liquid phase and is not required to have a diaphragm or an electrolytic solution so that the diagram or the solution is prevented from being deteriorated, and which can be made smaller in size and lighter: a hydrogen sensor having a sensing unit that is brought into contact with hydrogen, thereby generating a change in electric resistance, wherein the sensing unit is made of a hydrogen adsorptive simple metal or alloy, or is made of a material selected from nanocarbon materials, hydrogen absorptive simple metals, and hydrogen adsorptive alloys.

Patent Document 5 discloses a hydrogen gas sensor wherein a pair of electrodes for measuring electric resistance are set to a sensing unit made of a metal oxide semiconductor such as TiO₂, SrTiO₃ or BaTiO₃.

Patent Document 6 discloses a penetrating-hydrogen gas amount measuring device **characterized in that**: a cell-type hydrogen measuring sensor element of a fuel battery wherein carbon cloth electrodes are fitted to both sides of a solid polymeric electrolytic membrane is set to a cylinder in such a manner that the edge of one of openings in the sensor element partitions the inside of the cylinder in substantially parallel to an opening plane of the cylinder that is to contact a surface to be measured; and a non-resistance ampere meter is located for measuring the current value between the positive electrode and the negative electrode.

Patent Document 7 discloses a technique wherein an oxide semiconductor is adopted for a sensor head, and the impendance characteristic of the oxide semiconductor is measured, thereby detecting hydrogen gas. This is a technique making use of a phenomenon that when hydrogen gas is adsorbed on the surface of the oxide semiconductor, a change is generated in the impendance characteristic of the oxide semiconductor.

Patent Document 8 discloses a technique wherein zirconia, which is a solid electrolyte, is adopted for a sensor head, and the impedance of the zirconia, or the phase angle of the impedance is measured, thereby detecting the concentration of a combustible gas containing, in the molecule thereof, a hydrogen atom.

Patent Document 3 discloses a technique of adopting a thermistor element in a sensor head, and measuring the resistance of the thermistor element, thereby detecting hydrogen gas. This is a technique making use of a phenomenon that: hydrogen gas and air are different from each other in thermal conductivity; thus, in accordance with the hydrogen gas concentration around the sensor head, the heat radiating property is varied so that the thermal equilibrium temperature of the thermistor element is varied.
[Patent Document 1] Japanese Patent Application Laid-Open (JP-A) No. 2001-319688
[Patent Document 2] Japanese Patent No. 2981545
[Patent Document 3] JP-A No. 2007-141489
[Patent Document 4] JP-A No. 2004-125513
[Patent Document 5] JP-A No. 2002-071611
[Patent Document 6] JP-A No. 2002-289243
[Patent Document 7] JP-A No. 7-103924
[Patent Document 8] JP-A No. 2006-90812
[Patent Document 9] JP-A No. 2004-37235

### Disclosure of the Invention

### Problems to be solved by the invention

However, the batteries descried in Patent Documents 1 to 3 described above are each a battery using an ionic liquid, which a liquid ion conductor; thus, the battery has problems that: when the battery is constructed, it is necessary to fill an electrolytic solution into a casing and then seal the casing, so that the production process thereof becomes complicated; and further the leakage of the liquid may be generated by overcharging, mechanical impact or the like, so that many restrictions are imposed on the handling thereof.

The hydrogen sensor described in Patent Document 4 is a sensor of detecting the electric resistance value varied by a matter that hydrogen gas is adsorbed in its sensing unit made of a hydrogen adsorptive simple metal or alloy. Since the state that hydrogen is adsorbed in the sensing unit is maintained, the sensor cannot follow a dynamic change. Thus, the sensor has a problem that a purging operation becomes necessary, which is an operation for discharging adsorbed hydrogen from the sensing unit for the preparation of the next measurement.

In the hydrogen gas sensor described in Patent Document 5, a change in the electric resistance of its metal oxide semiconductor, which follows reaction between oxygen and hydrogen gas adsorbed on the surface, is detected. It is therefore necessary to set a heating element for heating the element temperature of the sensing unit to about 400°C in order to generate adsorption and desorption of oxygen molecules sufficiently. For this reason, there remain a problem that consumption power increases, another problem that a heat resistant structure needs to be set up, and still another problem that the sensor responds to methane gas, carbon monoxide gas and other combustible gases besides hydrogen gas, so that the sensor has no gas selectivity.

Furthermore, in the penetrating-hydrogen gas amount measuring device described in Patent Document 6, perfluorosulfonic acid resin used as its solid polymeric electrolytic membrane exhibits a good hydrogen ion conductivity in a wet environment. However, the device has problems that in a dry environment, the resin cannot be caused to function effectively; and when the resin contains a large amount of water at high temperature, the strength thereof is lowered since the resin does not have any crosslinked structure. Additionally, about perfluorosulfonic acid resin, the step of producing a membrane therefrom is complicated, so that the production costs are high. Thus, from the viewpoint of a decrease in costs, a further improvement has been desired.

In the techniques disclosed in Patent Documents 7 and 8, the temperature at which their sensor head operates appropriately is high, so that a heater needs to be set up for heating the sensor head up to the operating temperature thereof. As a typical operation temperature, for example, Patent Document 7 describes 400°C, and Patent Document 8 describes a temperature of 500 to 1000°C. In the technique disclosed in Patent Document 9, the heat radiating property of the atmosphere is affected by not only the hydrogen gas concentration but also the humidity. Thus, in order to cancel the effect of the humidity, four thermistor elements are used to form the sensor head. As described herein, when a heater is set up around the sensor head or plural thermistor elements are used to form the sensor head, the structure of the hydrogen gas detecting device becomes complicated to hinder the device from being made small in size and being decreased in costs.

In light of the above-mentioned problems, an object of the invention is to provide a solid ion conductor that can be used suitably for an electrochemical device or a hydrogen gas sensor. Another object thereof is to provide an electrochemical device wherein such a solid ion conductor is used to make the production process simple and remove a fear that liquid leakage is generated; and a hydrogen gas sensor and a hydrogen gas detecting device which have a good hydrogen-gas-selectivity without making any purging operation, can attain a high-precision detection in such a manner that the detection property thereof is not largely affected by environmental conditions, and can further be formed at relatively low costs.

### [Means for solving the problems]

In order to achieve the object, a characteristic structure of the solid ion conductor according to the present invention is a point that a solid ion conductor is used in an electrochemical device and is obtained by subjecting a mixture of an ionic liquid and a resin to curing treatment.

The inventors have made eager researches repeatedly, so as to gain a finding that when an ionic liquid is mixed with a resin and the mixture is subjected to curing treatment, a stable solid ion conductor having a shape-keeping property can be obtained. The inventors have then found out that such a solid ion conductor is used suitably for an electrochemical device such as a secondary battery, an electric double layer capacitor, an electrochromic display or a hydrogen gas sensor.

The solid ion conductor is obtained by mixing the ionic liquid with a photocurable resin, a thermosetting resin or a thermoplastic resin, and subsequently subjecting the mixture to the curing treatment.

By selecting, as the resin with which the ionic liquid is mixed, a photocurable resin, a thermosetting resin or a thermoplastic resin, a solid ion conductor which can be worked into any shape is obtained. Thus, the flexibility of the structure of an electrochemical device can be certainly kept.

It is preferred that the ionic liquid be a liquid having one or more cationic moieties selected from imidazolium based ions, pyridinium based ions, aliphatic amine based ions, alicyclic amine based ions and aliphatic phosphonium ions, and having one or more anionic moieties selected from halogen ions, halogen based ions, phosphonate based ions, boric acid based ions, triflate based ions, and imide based ions.

A characteristic structure of the electrochemical device according to the present invention is a point that a pair of electrodes are formed in the state that the above-mentioned solid ion conductor is sandwiched therebetween. Such a structure makes it possible to yield an electrochemical device such as a battery having a stable power generating property.

Furthermore, it is preferred that an electrolytic salt containing an ion corresponding to the kinds of the electrodes be added to the solid ion conductor. The ion necessary in the ion conductor between the electrodes is decided in accordance with the selected kinds of the electrodes. Thus, by adding an electrolytic salt containing an ion corresponding to the kinds of the electrodes to the ionic liquid, an electrochemical device having good properties is obtained.

A characteristic structure of a process for producing an electrochemical, device according to the present invention is a point that a process for producing an electrochemical device includes a mixing step of mixing an ionic liquid with a resin selected from a photocurable resin, a thermosetting resin and a thermoplastic resin, and stirring the mixture, a curing treatment step of curing the ion conductor subjected to the stirring and mixing treatment in the mixing step, and an electrode forming step of forming a pair of electrodes onto the ion conductor cured in the curing treatment step.

A characteristic structure of the hydrogen gas sensor according to the present invention is a point that the hydrogen gas sensor includes a detecting unit wherein a catalyst layer is formed on at least one surface of a substrate formed by the solid ion conductor.

As a result of the inventors' eager researches, it has been verified that when such a solid ion conductor is used as a substrate and a catalyst layer made of a metal or the like is laid onto at least one surface of the substrate, power generating property is expressed. It has been verified that when hydrogen gas is supplied toward such a catalyst layer, the power generating property is varied in accordance with the hydrogen gas concentration, in short, the catalyst-layer-formed solid ion conductor can be used as a hydrogen gas sensor.

In such a hydrogen gas sensor, its detecting unit is preferably jointed at electrodes having gas permeability. For example, by supplying hydrogen gas to the electrode on the catalyst-layer-formed side and further supplying oxygen or air to the counter electrode, the concentration of hydrogen gas can be satisfactorily detected.

It is preferred that the catalyst layer be carried on at least one surface of the substrate, and be formed by a metal or alloy which is brought into contact with hydrogen gas to have a catalytic function, or an organic metal or organic material having a catalytic activity. In a case where the catalyst is carried by, for example, sputtering, the particle size distribution of the catalyst carried on the catalyst carrying body and the carried amount thereof can be suitably controlled so that a good power generating property can be obtained. Thus, the case is preferred.

It is preferred that the catalyst layer be carried on at least one surface of the substrate, and be formed by molybdenum carbide, which is a carbide that is brought into contact with hydrogen gas to have a catalytic function.

A platinum Pt or platinum based metal catalyst, which is relatively frequently used as a hydrogen-decomposing catalyst, is a very expensive material. Thus, the production cost of a hydrogen gas sensor is increased. This matter is one out of causes for hindering hydrogen gas sensors from spreading.

However, the detecting performances of hydrogen gas sensors are generally in proportion to the catalyst amount thereof. Therefore, even when a catalyst to be used is an expensive catalyst, the use amount cannot be decreased with ease. Thus, in order for a catalyst to maintain predetermined performances for a hydrogen gas sensor, a practical restriction is imposed thereon.

Thus, the inventors have made tests and researches on various catalytic materials as an alternative to platinum Pt catalysts, so as to verify that about hydrogen decomposing reaction, molybdenum carbide Mo₂C exhibits a catalytic effect equivalent to that of platinum Pt catalysts.

Additionally, molybdenum carbide MO₂C is very inexpensive material, the price thereof being one several tenth of that of platinum Pt, so that the production cost of a hydrogen gas sensor can be very effectively decreased.

A characteristic structure of a process for producing a hydrogen gas sensor according to the present invention is a point that the process includes a mixing step of mixing an ionic liquid with a resin selected from a photocurable resin, a thermosetting resin and a thermoplastic resin, and stirring the mixture, a curing treatment step of curing the ion conductor subjected to the stirring and mixing treatment in the mixing step to form a substrate, and a catalyst layer forming step of forming a catalyst layer on at least one surface of the substrate cured in the curing treatment step.

A characteristic structure of the hydrogen gas detecting device according to the present invention is a point that the device includes any one of the hydrogen gas sensors, a voltage measuring unit for measuring the inter-terminal voltage of a pair of electrodes jointed to the detecting unit, an impedance measuring unit for measuring the impedance characteristic of the detecting unit, and a control unit for deciding that the concentration of hydrogen gas is changed when a change in the inter-terminal voltage measured by the voltage measuring unit relative to a change in the impedance characteristic measured by the impedance measuring unit is a predetermined value or more.

It is preferred that the control unit store the impedance characteristic measured by the impedance measuring unit and the inter-terminal voltage measured by the voltage measuring unit in a memory, calculate out a change in the impedance characteristic from the impedance characteristic measured last time and that measured this time, and calculate out a change in the inter-terminal voltage from the inter-terminal voltage measured last time and that measured this time.

In this case, it is preferred that from the impedance change rate ΔCp and the voltage change rate ΔV represented by the following equations, respectively:
the impedance change rate: ΔCp = (|Cp2 - Cp 1|)/Cp1, and
the voltage change rate: ΔV = (|V2 - V1|)/V1
wherein CP1: the impedance value measured last time, Cp2: the impedance value measured this time, V1: the inter-terminal voltage value measured last time; and V2: the inter-terminal voltage value measured this time,
the control unit calculate out the ratio therebetween (ΔV/ΔCp) or the difference therebetween (ΔV- ΔCp) as a change in the inter-terminal voltage relative to a change in the impedance characteristic.

It is also preferred that from the impedance change rate ACp and the voltage change rate ΔV represented by the following equations, respectively:
the impedance change rate: ACp = (|Cp2 - Cp1|)/Cp1, and
the voltage change rate: ΔV = (|V2 - V1|)/V2
wherein CP1: the impedance value measured last time, Cp2: the impedance value measured this time, V1: the inter-terminal voltage value measured last time: and V2: the inter-terminal voltage value measured this time,
the control unit calculate out the ratio therebetween (ΔV/ΔCp) or the difference therebetween (ΔV - ΔCp) as a change in the inter-terminal voltage relative to a change in the impedance characteristic.

It is also preferred that from the impedance change rate ΔCp and the voltage change rate ΔV represented by the following equations, respectively:
the impedance change rate: ΔCp = (|Cp2 - Cp 1|)/ΔT, and
the voltage change rate: ΔV = (|V2 - V1|)/ΔT
wherein CP1: the impedance value measured last time, Cp2: the impedance value measured this time, V1: the inter-terminal voltage value measured last time; V2: the inter-terminal voltage value measured this time; and ΔT: the period from the time when the impedance or voltage value is measured last time to the time when the value is measured this time,
the control unit calculate out the ratio therebetween (ΔV/ΔCp) or the difference therebetween (ΔV - ΔCp) as a change in the inter-terminal voltage relative to a change in the impedance characteristic.

Preferably, the hydrogen gas detecting device further includes a hydrogen gas detection notifying means for notifying hydrogen gas detection to the outside, wherein the control unit causes the hydrogen gas detection notifying means to notify a hydrogen gas detection when the control unit decides that the concentration of hydrogen gas is changed.

A characteristic structure of a hydrogen gas detecting method according to the present invention is a point that the method in connection with any one of the hydrogen gas sensors, includes a voltage measuring step of measuring the inter-terminal voltage between a pair of electrodes jointed to the detecting unit, an impedance measuring step of measuring the impedance characteristic of the detecting unit, and a deciding step of deciding that the concentration of hydrogen gas is changed when a change in the inter-terminal voltage measured through the voltage measuring step relative to a change in the impedance characteristic measured through the impedance measuring step is a predetermined value or more.

### Advantageous effects

As described above, the present invention makes it possible to provide a solid ion conductor that can be used suitably for an electrochemical device or a hydrogen gas sensor.

The use of such a solid ion conductor makes it possible to supply an electrochemical device about which the production process is simple and a fear that liquid leakage is generated is removed, and a hydrogen gas sensor and a hydrogen gas detecting device which have a good hydrogen gas selectivity without making any purging operation, can attain a high-precision detection in such a manner that the detection property thereof is not largely affected by environmental conditions, and further can be formed at relatively low costs.

### Brief Description of the Drawings

FIG. 1 is a structural view of a battery that is an example of the electrochemical device according to the present invention.
FIGs. 2 are explanatory views of an experimental production procedure of an electrochemical device according to the present invention.
FIG. 3 is an explanatory view of a method for measuring the output characteristic of the experimentally produced electrochemical device.
FIG. 4 is a charging characteristic chart of a battery produced experimentally in Example 5.
Fig. 5A is a discharging characteristic chart of the battery produced experimentally in Example 5, and FIG. 5B is a discharging characteristic chart of the battery, which is obtained by enlarging an important area in FIG. 5A.
FIG. 6 is a structural view of a hydrogen ion sensor which is another example of the electrochemical device according to the present invention.
FIG. 7 shows another embodiment, and is a structural view of a hydrogen ion sensor which is still another example of the electrochemical device according to the present invention.
FIG. 8 is a sectional view of a sensor head which is a part of a hydrogen gas detecting device.
FIG. 9 is a block diagram illustrating the system of the hydrogen gas detecting device.
FIG. 10 is a flowchart referred to in order to describe the operation of the hydrogen gas detecting device.
FIGs. 11 are explanatory views of steps of producing a sample of the sensor head.
FIG. 12 is a graph showing measurement results of the voltage and the impedance when hydrogen gas is blown to the sample of the sensor head.
FIG. 13 is an explanatory view which schematically and partially illustrates an experimental system used to evaluate performances of the hydrogen gas detecting device.
FIG. 14 is a graph wherein values of the temperature, humidity, voltage and impedance at individual times are plotted.
FIG. 15 is a graph wherein values of the temperature, humidity and voltage change rate, and the impedance change rate at the individual times are plotted.
FIG. 16 is a graph wherein values of the ratio between the impedance change rate and the voltage change rate at the individual times are plotted.
FIG. 17 is another graph wherein values of the ratio between the impedance change rate and the voltage change rate at the individual times are plotted.

### Reference Numerals

1: solid ion conductor
2: catalyst layer
3a, 3b: electrodes
4: electrochemical device (battery, hydrogen gas sensor)
5: photocurable resin (NEOPOL)
6: ionic liquid (1-ethyl-3-methylimidazolium tetrafluoroborate)
7: agate mortar
8: pestle
10: transparent PET film
11: transparent PET film
12: coater
13: measuring device (digital MULTIMETER)
14: copper electrode
100: sensor head
101: substrate
102: catalyst layer
103, 104: electrodes
103c, 104c: pores
200: hydrogen gas detecting device
201: voltage measuring unit
202: impedance measuring unit
203: control unit
204: buzzer
205: lamp
206: external terminal
207: reset button
303: agate mortar
304: agate pestle
305, 307: transparent ZEONOR film
306: mixed resin
308: platinum layer
401: environment tester
402: container
403: syringe

### Best Mode for Carrying Out the Invention

### [Embodiment 1]

Hereinafter, a description will be made about a battery which is an example of the solid ion conductor according to the present invention and an electrochemical device wherein the solid ion conductor is used.

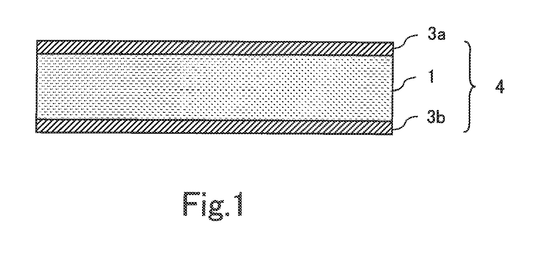

An illustrated in FIG. 1, a battery 4 as an electrochemical device according to the present invention is constructed by arranging a pair of electrodes 3a and 3b onto both surfaces of a solid ion conductor 1 shaped into a film form.

The solid ion conductor 1 is obtained by subjecting a mixture of an ionic liquid and a resin to curing treatment. Specifically, the conductor is obtained by mixing an ionic liquid with a photocurable resin, a thermosetting resin or a thermoplastic resin, and then subjecting the mixture to curing treatment.

In the case of adopting a photocurable resin as the resin, the film-form solid ion conductor 1 is obtained by mixing and stirring an ionic liquid, the photocurable resin, a photopolymerization initiator, and an optional stabilizer and optional others, shaping the mixture into a film form, and then irradiating, for example, ultraviolet rays onto the film.

The photocurable resin may be epoxy acrylate, urethane acrylate, polyester acrylate, unsaturated polyester resin, diazo resin, azide resin, or the like. The photocurable resin referred to in the present invention means a broad concept including ultraviolet curable resin, visible ray curable resin, and electron beam curable resin.

In the case of adopting a thermosetting resin as the resin, the film-form solid ion conductor 1 is obtained by mixing and stirring an ionic liquid, the thermosetting resin, and a reactant, shaping the mixture into a film form, and then subjecting the film to heating treatment.

The thermosetting resin may be phenol resin, epoxy resin, urea resin, melamine resin, unsaturated polyester resin, polyurethane, polyimide, furan resin, silicone resin, allyl resin, or the like.

In the case of adopting a thermoplastic resin as the resin, the film-form solid ion conductor 1 is obtained by mixing and stirring an ionic liquid, and the thermoplastic resin which is in a melted state at high temperature, shaping the mixture into a film form, and then subjecting the film to cooling treatment.

The thermoplastic resin may be a commodity resin such as polyethylene, polypropylene, polystyrene or polyethylene terephthalate, an engineering resin such as polycarbonate, polyamide or polyimide, a super engineering resin, or the like.

The ionic liquid used in the present invention is not particularly limited, and it is sufficient for the ionic liquid to have one or more cationic moieties selected from imidazolium based ions each represented by a chemical formula 1, pyridinium based ions each represented by a chemical formula 2, aliphatic amine based ions each represented by a chemical formula 3, alicyclic amine based ions each represented by a chemical formula 4, and aliphatic phosphonium based ions each represented by a chemical formula 5, and have one or more anionic moieties selected from halogen ions, halogen based ions, phosphonate based ions, boric acid based ions, triflate based ions, and imide based ions.

Furthermore, it is preferred to add thereto an electrolytic salt containing an ion corresponding to the kinds of the electrodes.

In the case of, for example, a lithium ion battery wherein metallic lithium is used as its negative electrode, a more stable power generating property is obtained by adding an electrolytic salt containing lithium, such as LiClO₄, LiPF₆ or LiBF₄, to the negative electrode, wherein the precipitation and dissolution reaction of lithium are generated. The electrolytic salt is not particularly limited, and may be a salt containing a cation necessary for the electrode.

R, R1, R2, and R3 shown in each of the chemical formulae are each any one of hydrogen, alkyl groups, aryl groups, and alkoxyalkyl groups.

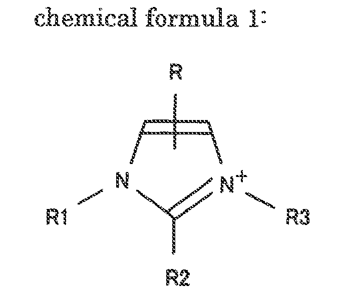

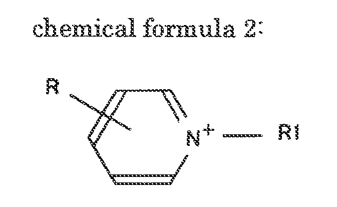

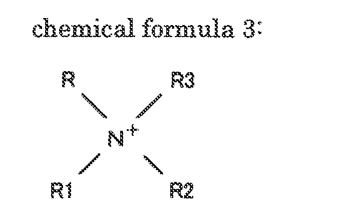

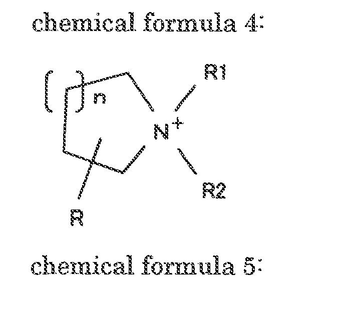

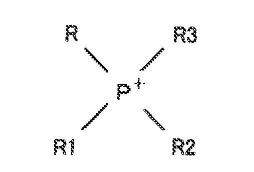

The materials of the electrodes 3a and 3b formed on both the surfaces of the solid ion conductor 1 shaped as described above may be any two metals that are different from each other in ionization tendency.

In a case where the solid ion conductor and the electrodes are formed, in particular, into a battery, it is preferred to use, for the negative electrode, a metal having a large ionization tendency, such as an alkali metal or an alkaline earth metal, which is low in redox potential, or an alloy thereof since a high voltage can be certainly kept.

In a case where the solid ion conductor and the electrodes are formed into an electric double layer capacitor, it is advisable that the pair of the electrodes 3a and 3b be made of the same metal, carbon, or the like.

These electrodes may be formed by sputtering, vacuum evaporation, electron irradiation, CVD, PVD, impregnation, spray coating, spray thermal decomposition, kneading, blasting or blowing, painting with a roll or pallet, screen printing, mixing, a photoelectrolysis method, a coating method, a sol-gel method, a dipping method, or the like.

In the embodiment, the description has been made mainly about the battery as an example of electrochemical devices. However, the electrochemical device according to the present invention is not limited to any battery, and the invention may be applied to an electric double layer capacitor, an electrochromic display, a hydrogen gas sensor, which will be described later, or any other electrochemical device in which a pair of electrodes are formed to sandwich an ion conductor therebetween.

The form of the solid ion conductor 1 is not limited to any film form. Thus, the conductor 1 may be a conductor wherein a two-dimensional body is formed into an eddy form, a three-dimensional conductor, or the like; it is advisable to make the solid ion conductor into an appropriate shape in accordance with the shape of an electrochemical device to be produced. The battery 4 is put into a casing equipped with terminals connected to the electrodes 3a and 3b, respectively, thereby making a final product.

In short, the process for producing an electrochemical device according to the present invention includes a mixing step of mixing an ionic liquid with a resin selected from a photocurable resin, a thermosetting resin and a thermoplastic resin, and stirring the mixture, a curing treatment step of curing the ion conductor subjected to the stirring and mixing treatment in the mixing step, and an electrode forming step of forming a pair of electrodes onto the ion conductor cured in the curing treatment step.

### [Examples of the embodiment 1]

Hereinafter, a description will be made about examples corresponding to the embodiment 1.
(Example 1) Prepared were 1-ethyl-3-methylimidazolium tetrafluoroborate, which was bought from Kanto Chemical Co., Inc., as an ionic liquid; an epoxy acrylate resin (trade name: NEOPOL) manufactured by Japan U-PiCA Co., Ltd. as a photocurable resin; and a radical initiator (photopolymerization initiator) manufactured by DIC Corporation.

As the radical initiator, the following may be used as the case may be: MMMP (2-methyl-1-[4-(methylthio)phenyl]-2-monopholinopropane-1), BOMB (2-benzyl-2 dimethylamino-1-(monopholinophenyl)-butane-1), or the like.

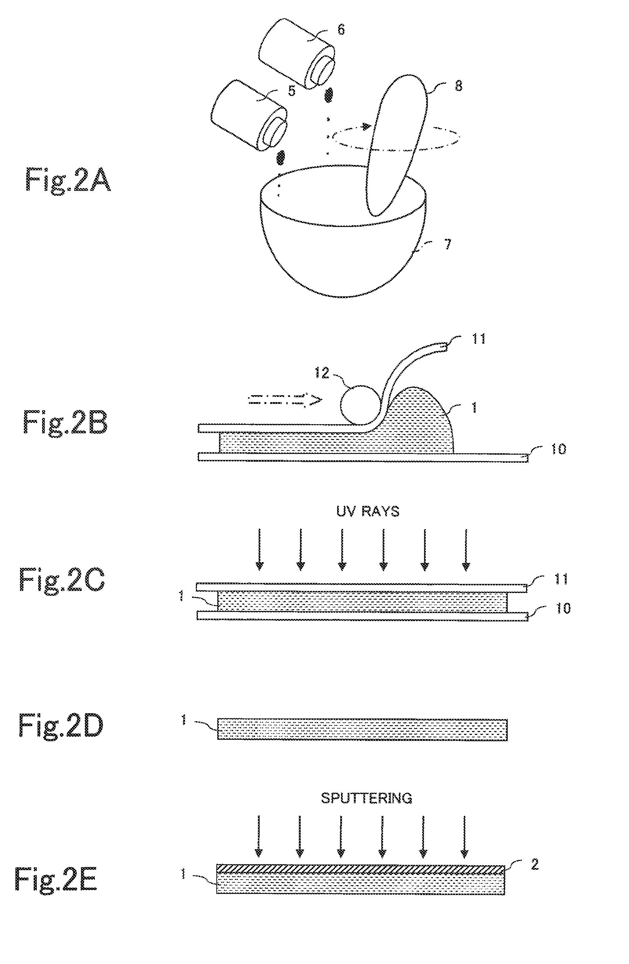

As illustrated in FIG. 2A, to NEOPOL (10g) (reference number 5 in the figure) were first added 0.5 mL of the ionic liquid (reference number 6 in the figure) and 0.23 g of the radical initiator (manufactured by DIG Corporation), and a pestle 8 was used to mix and stir the components in an agate mortar 7 until the mixture turned uniform.

At this time, the mixing and stirring were performed until the transparent epoxy acrylate resin turned into a white gel form. The blend ratio between the ionic liquid and the photocurable resin is not limited to this value, and is an appropriately-set value.

As illustrated in FIG. 2B, after the mixing and stirring, an appropriate amount of a white gel 1 was dropped onto a transparent PET film 10, and further a transparent PET film 11 was put thereon. The workpiece was pressed from above the workpiece by means of a glass rod (coaster) 12, so as to stretch the white gel 1 into a film form.

As illustrated in FIG. 2C, a mercury lamp (360 nm) was used to further irradiate thereto for 30 seconds to cure the resin. Thereafter, the transparent PET films 10 and 11 were peeled to form the solid ion conductor 1 as a substrate, as illustrated in FIG. 2D.

The film thickness was measured. As a result, the thickness was 100 µm. In the present invention, the film thickness is not limited, and may be a thickness permitting a film having the thickness to be formed. The thickness is preferably from 50 µ to 300 µm.

illustrate in FIG. 2E, platinum Pt was sputtered onto one surface of the solid ion conductor obtained through the above-mentioned steps to form electrodes. Conditions for the sputtering were as follows: Ar: 20 cc, RF: 300 W, and substrate rotating rate: 1.6 rpm.

In short, the electrochemical device is produced through a mixing step of mixing an ionic liquid with a resin selected from a photocurable resin, a thermosetting resin and a thermoplastic resin, and stirring the mixture, a curing treatment step of curing the ion conductor subjected to the stirring and mixing treatment in the mixing step, and an electrode forming step of forming a pair of electrodes onto the ion conductor cured in the curing treatment step.

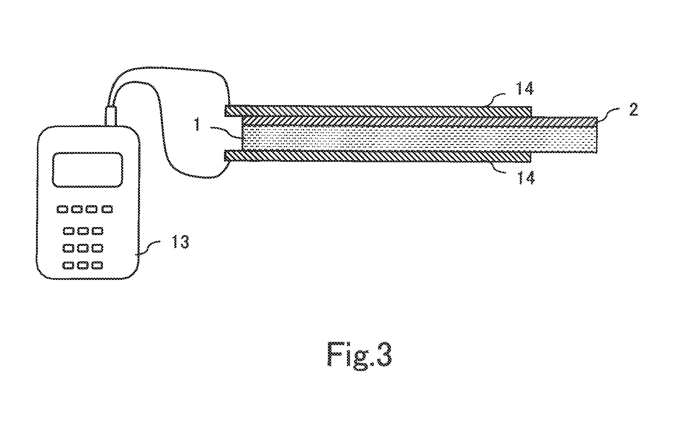

After the end of the sputtering, as illustrated in FIG. 3, both surfaces of the solid ion conductor 1, wherein the platinum Pt electrodes were formed on one of its surfaces, were sandwiched between copper electrodes 14 and 14, and the voltage was measured with a measuring device 13 (digital MULTIMETER, IWATSU VOAC 7523). As a result, a voltage of 500 mV was recognized. It was verified that a current of 30 nA was taken out.

(Example 2) Aluminum Al was sputtered onto one surface of a solid ion conductor yielded through the above-mentioned step to form electrodes. Conditions for the sputtering were as follows: Ar: 50 cc, DC: 620 W, current 2 A, and substrate rotating rate, 6 rpm. After the end of the sputtering, both surfaces thereof were sandwiched between copper electrodes, and the voltage was measured. As a result, a voltage of 20 mV was recognized.

(Example 3) Gold Au was sputtered onto one surface of a solid ion conductor yielded through the above-mentioned step to form electrodes. Conditions for the sputtering were as follows: Ar: 20 cc, DC: 620 W, current: 2 A, and substrate rotating rate: 6 rpm. After the end of the sputtering, both surfaces thereof were sandwiched between copper electrodes, and the voltage was measured. As a result, a voltage of 215 mV was recognized.

(Example 4) Palladium Pd was sputtered onto one surface of a solid ion conductor yielded through the above-mentioned step to form electrodes. Conditions for the sputtering were as follows. Ar: 20 cc, DC: 640 W, current: 2 A, and substrate rotating rate: 6 rpm. After the end of the sputtering, both surfaces thereof were sandwiched between copper electrodes, and the voltage was measured. As a result, a voltage of 290 mV was recognized.

(Example 5) Aluminum Al was sputtered onto one surface of a solid ion conductor yielded through the above-mentioned step, and platinum Pt was sputtered onto the other surface to form electrodes. Conditions for the sputtering of platinum Pt were the same as in Example 1, and conditions for the sputtering of aluminum Al were the same as in Example 2.

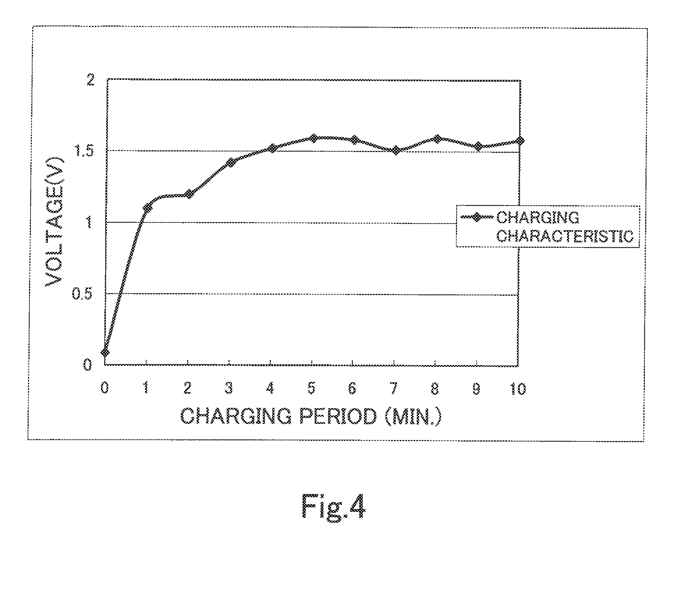

After the end of the sputtering onto both the surfaces, both surfaces thereof were sandwiched between copper electrodes, and then the solid ion conductor was charged at a charging voltage of 2.0 V for 10 minutes. As a result, it was verified that the battery was charged so as to give a voltage of about 1.6 V The charging characteristic at this time is shown in FIG. 4.

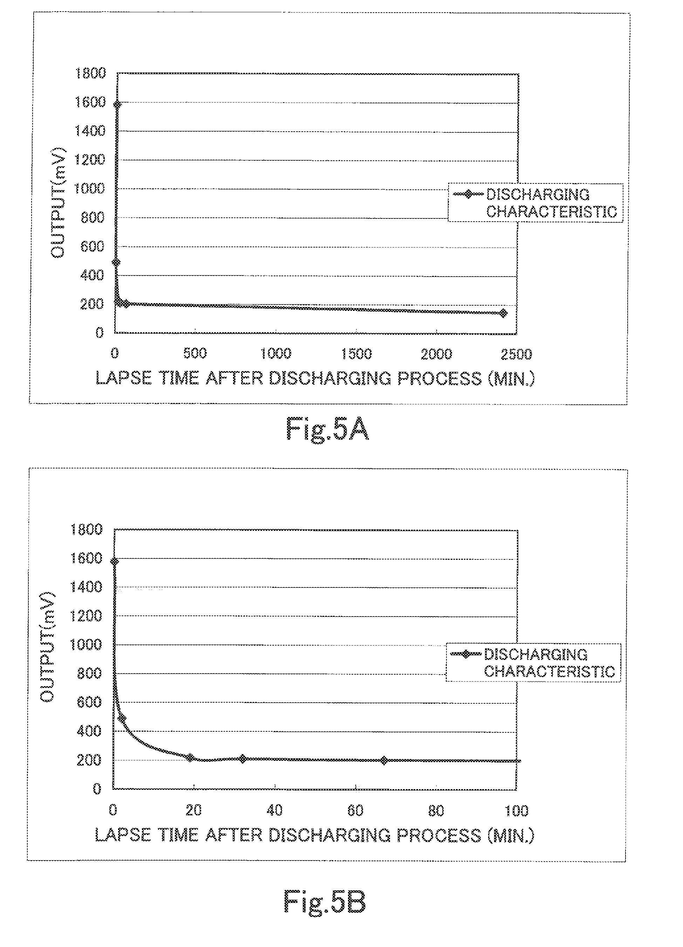

A resistor having a resistance of 1.8 Ω was connected to the thus-charged sample, the substrate of which was the solid ion conductor 1, and then the discharging characteristic thereof was measured. As a result, it was verified that a current having a relatively large capacity flowed initially to lower a voltage, and then a constant current flowed at about 200 mV, that is, charging and discharging characteristics as a secondary battery were obtained. The discharging characteristic at this time is shown in each of FIGs. 5A and 5B.

(Example 6) Platinum Pt was sputtered onto both surfaces of a solid ion conductor yielded through the above-mentioned step to form electrodes. Conditions for the sputtering were the same as in Example 1. After the end of the sputtering, both surfaces thereof were sandwiched between copper electrodes, and the voltage was measured. As a result, no voltage was recognized. In other words, although electrodes of the same metal were formed at least on both surfaces of the solid ion conductor, no power generating property was exhibited.

(Example 7) Instead of the epoxy acrylate resin (trade name: NEOPOL) manufactured by Japan U-PiCACo., Ltd., which was used as the photocurable resin in Examples 1 to 6, a urethane acrylate resin (brand name: 8965-85) manufactured by Japan U-PiCA Co., Ltd. was used, and a solid ion conductor 1 as a substrate was formed in accordance with the same steps in Example 1.

Platinum Pt was sputtered onto one surface of the yielded solid ion conductor to form electrodes. Conditions for the sputtering were the same as in Example 1. After the end of the sputtering, both surfaces thereof were sandwiched between copper electrodes, and the voltage was measured. As a result, a voltage of 100 mV was recognized.

(Example 8) Instead of 1-ethyl-3-methylimidazolium tetrafluoroborate bought from Kanto Chemical Co., Inc., which was used as the ionic liquid in Examples 1 to 6, N-methyl-N-propylpiperidium bis(trifluoromethanesulfonyl)imide, which was bought from Kanto Chemical Co., Inc., was used, and a solid ion conductor 1 as a substrate was formed in accordance with the same steps in Example 1.

Platinum Pt was sputtered onto one surface of the yielded solid ion conductor to form electrodes. Conditions for the sputtering were the same as in Example 1. After the end of the sputtering, both surfaces thereof were sandwiched between copper electrodes, and the voltage was measured. As a result, a voltage of 200 mV was recognized.

### [Embodiment 2]

[Hereinafter, a description will be made about a hydrogen gas sensor which is another example of the solid ion conductor according to the present invention and an electrochemical device wherein the solid ion conductor is used, and a process for producing the sensor.

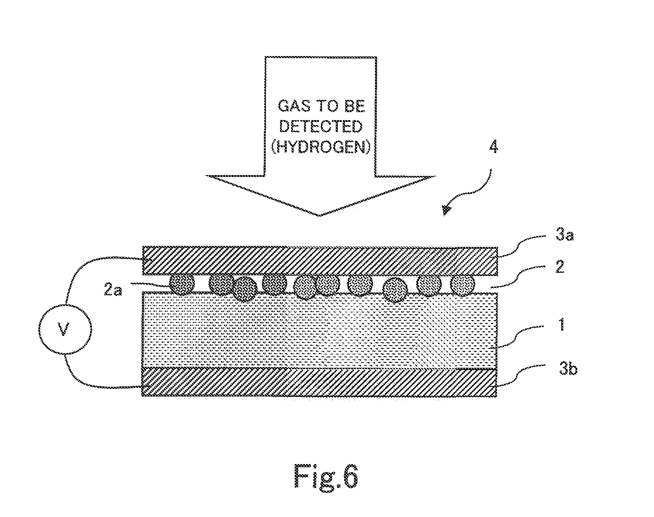

As illustrated in FIG. 6, a hydrogen gas sensor 4 as an electrochemical device according to the present invention has a detecting unit wherein a catalyst layer 2 is formed on at least one surface of a solid ion conductor 1 shaped into a film form, and electrodes 3a and 3b are arranged onto both surfaces of the catalyst layer 2 to sandwich the catalyst layer 2 therebetween.

The solid ion conductor 1 is obtained by subjecting a mixture of an ionic liquid and a resin to curing treatment as described in [Embodiment 1]. Hereinafter, about the content of the solid ion conductor 1, description overlapping with the description in [Embodiment 1] will be omitted.

A catalyst 2a constituting the catalyst layer 2 is preferably a metal, an alloy an organic metal, an organic material, or a carbide that is brought into contact with hydrogen gas to have a catalyst function, or some other material.

The catalyst 2a is carried on at least one surface of the solid ion conductor 1, which is a substrate, by use of a thin-film-forming method based on sputtering.

The catalyst 2a may be preferably platinum Pt or a platinum alloy, which has a high catalytic activity; besides, the catalyst may be at least one metal or alloy selected from gold Au, silver Ag, iridium Ir, palladium Pd, ruthenium Ru, osmium Os, nickel Ni, tungsten W, molybdenum Mo, manganese Mn, yttrium Y, vanadium V. niobium Nb, titanium Ti, zirconia, rare earth metals, and others.

The catalyst 2a may also be an organic metal or organic material which is brought into contact, with hydrogen gas to have a catalytic activity. Such an organic metal catalyst may be, for example,
N,N'-bis(salicylidene)ethylene-diamino-metal (= Ni, Fe, V or the like), or N,N' -mono-8-quinoly-σ-phenylenediamino-metal (= Ni, Fe, V or the like). The organic material may be, for example, any pyrrolopyrrole red pigment, or any dipyridyl derivative.

Furthermore, the catalyst 2a may be a carbide which is brought into contact with hydrogen gas to have a catalytic activity, and may be molybdenum carbide Mo₂C, or a material containing molybdenum carbide Mo₂C. A case where molybdenum carbide Mo₂C is used will be described in detail later.

As a method for forming the catalyst layer 2, a known method other than sputtering may be adopted. The catalyst layer 2 may be formed by adopting, for example, a vacuum evaporation method, an electron irradiation method, CVD, PVD, an impregnation method, a spray coating method, a spray thermal decomposition method, a kneading method, a blasting or blowing method, a painting method with a roll or pallet, a screen printing method, a mixing method, a photoelectrolysis method, a coating method, a sol-gel method, a dipping method, or the like.

The electrodes 3a and 3b may be constituted by a copper nickel alloy thin film wherein many pores are made, or the like, or may be constituted by a porous metal-sintered body having a good electroconductivity.

In the hydrogen gas sensor 4, platinum is used to form the catalyst layer 2, and father the catalyst layer 2 and the electrode 3b, which is arranged oppositely thereto so as to sandwich the substrate, i.e., the solid ion conductor 1 therebetween, constitute a battery so as to generate a given electromotive force. In a case where in this state hydrogen gas flows into the electrode 3a on the catalyst layer 2 side, hydrogen is decomposed into a hydrogen ion and an electron by effect of the catalyst 2a. The effect thereof causes a decline in the electromotive force.

Although the cause for this phenomenon is not made clear, the cause is presumed as follows: when the electrode 3b is constituted by, for example, a metal higher in ionization tendency than platinum, an electromotive force is generated to cause electrons so as to be supplied from the electrode 3b at the anode side through an external circuit to the platinum at the cathode side. In a case where hydrogen gas contacts the platinum side at this time, hydrogen gas is decomposed into hydrogen ions and electrons by the catalytic function of the platinum, so that the electrons generated by the decomposition flow to the platinum side. It is presumed that this matter causes a change in the discharge state.

A clear correlative relationship has been found between a change in the outputted voltage value of the sensor 4 and the concentration of hydrogen gas flowing into the surrounding environment. Accordingly, when the electromotive force is measured, the concentration of the hydrogen gas can be detected. Specifically, the hydrogen gas concentration can be gained by setting up an amplifying circuit, of a high-input impedance, for converting a current flowing between both the electrodes 3a and 3b to a voltage, and then detecting the output voltage of the amplifying circuit.

The hydrogen gas sensor 4 may be one that a catalyst layer is formed on at least one surface of a substrate constituted by the solid ion conductor 1, or that catalyst layers are formed on both surfaces thereof. In the latter case, however, it is necessary that the catalyst layers formed on both the surfaces be made of catalytic metals different from each other in ionization tendency, respectively.

The film thickness of the film-shaped substrate is not particularly limited, and may be appropriately set as far as desired advantageous effects are produced. The substrate is not limited to any two-dimensional body. Thus, the substrate may be a three-dimensional body. In this case, faces on which the electrodes are formed are not limited to opposite faces.

As the catalyst for forming the catalyst layer 2, molybdenum carbide Mo₂C can be preferably used.

Molybdenum carbide Mo₂C is far more inexpensive than platinum Pt, and the market price thereof is about 1/20 of that of platinum Pt about targets used in a sputtering machine.

Accordingly, when molybdenum carbide Mo₂C is used as a catalyst alternate to platinum Pt, the production cost of a hydrogen gas sensor can be made largely lower than when platinum Pt is used. According to this matter, the present invention makes it possible to make the productivity of hydrogen gas sensors remarkably higher than the prior art.

About the hydrogen gas sensor according to the present invention, the ability for detecting hydrogen gas is in proportion to the catalyst area contacting hydrogen gas; thus, when the amount of the catalyst carried on the substrate is increased, the hydrogen gas detecting ability can be made high. From the viewpoint of costs, the use of the molybdenum carbide Mo₂C as the catalyst also makes it easy to increase the amount of the catalyst carried on the substrate.

Even when it is estimated that the catalytic performance of the molybdenum carbide Mo₂C catalyst is somewhat lower than that of any platinum Pt catalyst, the amount of the carried catalyst can easily be increased to compensate for such a catalytic performance difference.

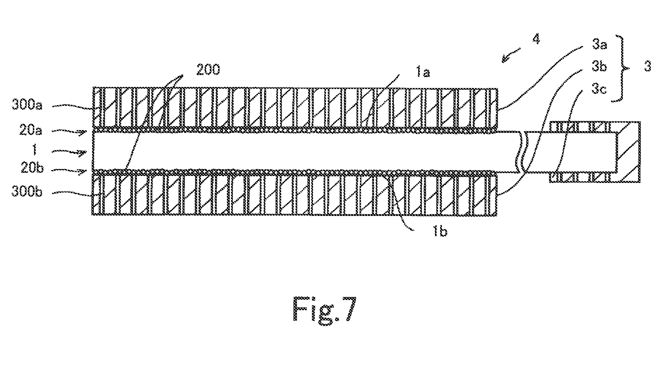

For example, a hydrogen gas sensor as illustrated in FIG. 7 can be realized. In the hydrogen gas sensor 4, catalyst layers 20a and 20b, on each of which a molybdenum carbide 200 is carried, are formed in respective predetermined regions of both surfaces 1a and 1b of a solid ion conductor 1, the surfaces being at one of end sides of the conductor 1; and electrodes 3a and 3b (3) are arranged as negative electrodes so as to be opposite to the catalyst layers 20a and 20b, respectively. Furthermore, an electrode 3c (3) functioning as a positive electrode is arranged on the other end side of the solid ion conductor 1. In the figure, reference numbers 300a and 300b represent pores made in the electrodes 3, and the pores function as gas flow channels.

According to the structure, wide areas extending over both the surfaces of the solid ion conductor 1 can be rendered hydrogen detecting regions, so that the hydrogen gas detecting ability can be made high.

In general, any platinum Pt catalyst exhibits a somewhat excessive reactivity with hydrogen. Therefore, in a hydrogen gas sensor using a platinum Pt catalyst, there may be caused a case where the sensor acts to cause an unnecessary hydrogen decomposing reaction to continue for hydrogen remaining after hydrogen gas is once detected.

However, when molybdenum carbide Mo₂C is used as the catalyst, excessive reaction with hydrogen is not generated to exhibit a catalytic characteristic that the sensor returns to an ordinary output state in several seconds after the sensor contacts hydrogen. For this reason, hydrogen can be suitably detected with a good responsibility even to a dynamic change in the concentration of hydrogen gas.

Furthermore, platinum Pt catalysts have a serious problem of the so-called "CO poisoning", which is a problem that carbon monoxide adheres onto the catalyst surface to cover the surface so that the activity of the catalyst, is declined.

However, molybdenum carbide Mo₂C is small in the effect of activity-decline based on CO poisoning than any platinum Pt catalyst. Thus, molybdenum carbide makes it possible to avoid a fall in the hydrogen detecting performance on the basis of CO poisoning, so that a stable sensor performance can be maintained.

Accordingly, molybdenum carbide Mo₂C is particularly high in usefulness when the carbide is used in an environment where carbon monoxide CO contacts a hydrogen gas sensor easily, for example, in a fuel cell car wherein a combustible gas fuel such as methane is used as a hydrogen source.

When the catalyst layer using molybdenum carbide Mo₂C is formed through a dry process such as sputtering, steps therefor are more easily finished than through any wet process using a precursor. A problem of waste liquid disposal can also be avoided. Thus, the dry process has large advantages also from the viewpoint of the production.

In order to yield molybdenum carbide Mo₂C through the wet process, it is general to use a process of combining oxygen with a molybdenum material to produce molybdenum oxide (Mo + 1/2O₂ → MoO), and then bubbling this with a combustible gas such as methane gas to yield molybdenum carbide Mo₂C, as described in JP-A No. 2005-38818.

However, when the catalyst layer is formed through a dry process, the catalyst layer can be formed only by sputtering a target made of molybdenum carbide Mo₂C in a vacuum chamber wherein a solid ion conductor is arranged.

Accordingly, the catalyst layer can be produced very effectively without considering the procurement of a precursor, a combustible gas and others that are required for the wet process, or production tactics very much. Although the CO poisoning problem that CO generated in the production process adheres onto the catalyst is caused according to the wet process, such a problem is not caused in the case of forming the catalyst layer through a dry process.

The above-mentioned process for producing a hydrogen gas sensor includes a mixing step of mixing an ionic liquid with a resin selected from a photocurable resin, a thermosetting resin and a thermoplastic resin, and stirring the mixture, a curing treatment step of curing the ion conductor subjected to the stirring and mixing treatment in the mixing step to form a substrate, and a catalyst layer forming step of forming a catalyst layer on at least one surface of the substrate cured in the curing treatment step.

### [Examples of the embodiment 2]

Hereinafter, examples of the hydrogen gas sensor will be described.
The production process thereof is substantially the same as illustrated in FIG. 2 referred to above. Thus, the process will be described, referring again to FIG. 2.

Prepared were 1-ethyl-3-methylimidazolium tetrafluoroborate, which was bought from Kanto Chemical Co., Inc., as an ionic liquid; an epoxy acrylate resin (trade name: NEOPOL) manufactured by Japan U-PiCA Co., Ltd. as a photocurable resin; and a radical initiator (photopolymerization initiator) manufactured by DIC Corporation.

As the radical initiator, the following may be used as the case may be: MMMP (2-methyl-1-[4-(methylthio)phenyl]-2-monopholinopropane-1), BDMB (2-benzyl-2 dimethylamino-1-(monopholinophenyl)-butane-1), or the like.

As illustrated in FIG. 2A, to NEOPOL (10g) (reference number 5 in the figure) were first added 0.5 mL of the ionic liquid (reference number 6 in the figure) and 0.23 g of the radical initiator (manufactured by DIC Corporation), and a pestle 8 was used to mix and stir the components in an agate mortar 7 until the mixture turned uniform. At this time, the mixing and stirring were performed until the transparent epoxy acrylate resin turned into a white gel form. The blend ratio between the ionic liquid and the photocurable resin is not limited to this value, and is an appropriately-set value.

As illustrated in FIG. 2B, after the mixing and stirring, an appropriate amount of a white gel 1 was dropped onto a transparent PET film 10, and further a transparent PET film 11 was put thereon. The workplace was pressed from above the workpiece by means of a glass rod (coater) 12, so as to stretch the white gel 1 into a film form.

As illustrated in FIG. 2C, a mercury lamp (360 nm) was used to further irradiate thereto for 30 seconds to cure the resin. Thereafter, the transparent PET films 10 and 11 were peeled to form the solid ion conductor 1 as a substrate, as illustrated in FIG. 2D.

The film thickness was measured. As a result, the thickness was 100 µm. In the present invention, the film thickness is not limited, and may be a thickness permitting a film having the thickness to be formed. The thickness is preferably from 50 µ to 300 µm.

(Example 1) As illustrated in FIG. 2E, platinum Pt was sputtered onto one surface of the solid ion conductor obtained through the above-mentioned steps to form a catalyst layer. Conditions for the sputtering were as follows: Ar: 20 cc, RF: 300 W, and substrate rotating rate: 1.6 rpm.

In short, the hydrogen gas sensor is produced through a mixing step of mixing an ionic liquid with a resin selected from a photocurable resin, a thermosetting resin and a thermoplastic resin, and stirring the mixture, a curing treatment step of curing the ion conductor subjected to the stirring and mixing treatment in the mixing step to form a substrate, and a catalyst layer forming step of forming a catalyst layer on at least one surface of the substrate cured in the curing treatment step.

After the end of the sputtering, as illustrated in FIG. 3, both surfaces of the solid ion conductor 1, wherein the catalyst layer 2 of platinum Pt was formed on one of its surfaces, were sandwiched between copper electrodes 14 in a ring form, and the voltage was measured with a measuring device 13 (measuring device MULTIMETER VOAC 7411, manufactured by Iwatsu Test Instruments Corp.). As a result, a voltage of 265 mV was recognized.

Next, in an environment having a normal temperature and a normal humidity, hydrogen gas having a concentration of 100% and hydrogen gas having a concentration of 4% (in the air) were each measured into a syringe by 40 cc. Each of the hydrogen gases was blown to the electrode on catalyst-layer-formed side. The measuring device MULTIMETER VOAC 7411 manufactured by Iwatsu Test Instruments Corp. was used to measure a change in the voltage.

When the hydrogen gas 100% in concentration was brought into contact therewith, the voltage of the hydrogen gas sensor was turned from 265 mV to ∼15 mV. When the hydrogen gas 4% in concentration was brought into contact therewith, the voltage of the hydrogen gas sensor was lowered from 265 mV to 120 mV. After the contacts of the hydrogen gases, the supply thereof was stopped. As a result, the sensor voltage was returned to a voltage of 265 mV. When such a measurement was repeatedly made, substantially the same characteristics were recognized.

(Example 2) Palladium Pd was sputtered onto one surface of a solid ion conductor yielded through the above-mentioned step to form a catalyst layer. Conditions for the sputtering were as follows: Ar: 20 cc, DC: 640 W, current: 2 A, and substrate rotating rate 6 rpm. After the end of the sputtering, both surfaces thereof were sandwiched between copper electrodes, and the voltage was measured. As a result, a voltage of 442 mV was recognized.

Next, in an environment having a normal temperature and a normal humidity, hyrogen gas having a concentration of 100% and hydrogen gas having a concentration of 4% (in the air) were each measured into a syringe by 40 cc. Each of the hydrogen gases was blown to the electrode on the catalyst-layer-formed side. The measuring device MULTIMETER VOAC 7411 manufactured by Iwatsu Test Instruments Corp. was used to measure a change in the voltage.

When the hydrogen gas 100% in concentration was brought into contact therewith, the voltage of the hydrogen gas sensor was turned from 442 mV to 138 mV. When the hydrogen gas 4% in concentration was brought into contact therewith, the voltage of the hydrogen gas sensor was lowered from 442 mV to 411 mV. After the contacts of the hydrogen gases, the supply thereof was stopped. As a result, the sensor voltage was returned to a voltage of 442 mV When such a measurement was repeatedly made, substantially the same characteristics were recognized.

(Example 3) Platinum Pt was sputtered onto both surfaces of a solid ion conductor yielded through the above-mentioned step to form a catalyst layer. Conditions for the sputtering were the same as in Example 1. After the end of the sputtering, both surfaces thereof were sandwiched between copper electrodes, and the voltage was measured. As a result, no voltage was recognized,

Next, in an environment having a normal temperature and a normal humidity, hydrogen gas having a concentration of 100% and hydrogen gas having a concentration of 4% (in the air) were each measured into a syringe by 40 cc. Each of the hydrogen gases was blown to the electrode on the catalyst-layer-formed side. The measuring device MULTIMETER VOAC 7411 manufactured by Iwatsu Test Instruments Corp. was used to measure a change in the voltage.

Even when the hydrogen gas 100% in concentration and the hydrogen gas 4% in concentration were each brought into contact therewith, no change in the voltage was recognized. In short, even when the same metal catalysts, that is, metal catalysts equal in ionization tendency to each other are carried onto both surfaces of a solid ion conductor, the resultant does not exhibit a function as a hydrogen gas sensor.

(Example 4) Platinum Pt was sputtered onto one surface of a solid ion conductor yielded through the above-mentioned step to form a catalyst layer, and aluminum Al was sputtered onto the other surface to form electrodes. Conditions for the sputtering of platinum Pt were the same as in Example 1, and conditions for the sputtering of aluminum -Al were as follows: Ar: 20 cc, DC: 620 W, current: 2A, and substrate rotating rate: 6 rpm. After the end of the sputtering onto both the surfaces, both surfaces thereof were sandwiched between copper electrodes, and the voltage was measured. As a result, a voltage of 676 mV was recognized.

Next, in an environment having a normal temperature and a normal humidity, hydrogen gas having a concentration of 100% and hydrogen gas having a concentration of 4% (in the air) were each measured into a syringe by 40 cc. Each of the hydrogen gases was blown to the electrode on the side where the platinum Pt layer was formed. The measuring device MULTIMETER VOAC 7411 manufactured by Iwatsu Test Instruments Corp. was used to measure a change in the voltage.

When the hydrogen gas 100% in concentration was brought into contact therewith, the voltage of the hydrogen gas sensor was turned from 676 mV to 170 mV. When the hydrogen gas 4% in concentration was brought into contact therewith, the voltage of the hydrogen gas sensor was lowered from 676 mV to 380 mV. After the contacts of the hydrogen gases, the supply thereof was stopped. As a result, the sensor voltage was returned to a voltage of 676 mV. When such a measurement was repeatedly made, substantially the same characteristics were recognized.

(Example 5) Instead of 1-ethyl-3-methylimidazolium tetrafluoroborate bought from Kanto Chemical Co., Inc., which was used as the ionic liquid in Examples 1 to 4, N-methyl-N-propylpiperidium bis(trifluoromethanesulfonyl)imide, which was bought from Kanto Chemical Co., Inc., was used, and a solid ion conductor was formed in accordance with the same steps as described above.

As illustrated in FIG. 2E, platinum Pt was sputtered onto one surface of the solid ion conductor to form a catalyst layer. Conditions for the sputtering were the same as in Example 1. Both surfaces thereof were sandwiched between copper electrodes, and the voltage was measured. As a result, a voltage of 210 mV was recognized.

Next, in an environment having a normal temperature and a normal humidity, hydrogen gas having a concentration of 100% and hydrogen gas having a concentration of 4% (in the air) were each measured into a syringe by 40 cc. Each of the hydrogen gases was blown to the electrode on the side where the catalyst layer was formed. The measuring device MULTIMETER VOAC 7411 manufactured by Iwatsu Test Instruments Corp. was used to measure a change in the voltage.

When the hydrogen gas 100% in concentration was brought into contact therewith, the voltage of the hydrogen gas sensor was turned from 210 mV to 116 mV When the hydrogen gas 4% in concentration was brought into contact therewith, the voltage of the hydrogen gas sensor was lowered from 210 mV to 187 mV. After the contacts of the hydrogen gases, the supply thereof was stopped. As a result, the sensor voltage was returned to a voltage of 210 mV. When such a measurement was repeatedly made, substantially the same characteristics were recognized.

(Example 6) Platinum Pt was sputtered onto one surface of the same solid ion conductor 1 as used in Example 1 under the same conditions as in Example 1 to form a catalyst layer. After the end of the sputtering, both surfaces thereof were sandwiched between copper electrodes, and a measuring device 13 (MULTIMETER VOAC 7523 manufactured by Iwatsu Test Instruments Corp.) was used to measure the electric current. As a result, a current of 30 nA was recognized.

Next, in an environment having a normal temperature and a normal humidity, hydrogen gas having a concentration of 100% was measured into a syringe by 40 cc, and then the gas was blown to the electrode on the side where the catalyst layer was formed. The measuring device MULTIMETER VOAC 7523 manufactured by Iwatsu Test Instruments Corp. was used to measure a change in the electric current.

When the hydrogen gas 100% in concentration was brought into contact therewith, the electric current of the hydrogen gas sensor was lowered from 30 nA to -10 µA. After the contact of the hydrogen gas, the supply thereof was stopped. As a result, the sensor current was returned to an electric current of 30 nA. When such a measurement was repeatedly made, substantially the same characteristics were recognized.

(Example 7) Platinum Pt was sputtered onto one surface of the same solid ion conductor 1 as used in Example 4 to form a catalyst layer, and aluminum A1 was sputtered onto the other surface to form electrodes. Conditions for sputtering platinum Pt and aluminum A1 were the same as in Example 4. After the end of the sputtering onto both the surfaces, both surfaces thereof were sandwiched between copper electrodes, and the electric current was measured. As a result, an electric current of 60 nA was recognized.

Next, in an environment having a normal temperature and a normal humidity, hydrogen gas having a concentration of 100% was measured into a syringe by 40 cc, and then the gas was blown to the electrode on the side where the catalyst layer was formed. The measuring device MULTIMETER VOAC 7523 manufactured by Iwatsu Test Instruments Corp. was used to measure a change in the electric current.

When the hydrogen gas 100% in concentration was brought into contact therewith, the electric current of the hydrogen gas sensor was lowered from 60 nA to -22 µA. After the contact of the hydrogen gas, the supply thereof was stopped. As a result, the sensor current was returned to an electric current of 60 nA. When such a measurement was repeatedly made, substantially the same characteristics were recognized.

(Example 8) As illustrated in FIG. 2A, to 10 g of an epoxy acrylate resin were added 0.5 mL of an ionic liquid and 0.23 g of an initiator. This was put into an agate mortar 7, and an agate pestle 8 was used to mix the components so as to make the mixture uniform. This blend ratio is an example.

As illustrated in FIG. 2B, after the end of the mixing, the mixed resin 23X was dropped onto a transparent PET film 10, and further another transparent PET film 11 was put thereon. A pressure was applied to the workpiece from above the PET film 11 by means of a bar coater (pressing rod) 12, so as to stretch the mixed resin to give a thickness of about 100 µm,

As illustrated in FIG. 2C, next, in the state that both the PET films 10 and 11 were laminated onto the mixed resin, a mercury lamp (360 nm) was used to irradiate ultraviolet rays thereto from the outside to cause a photocuring reaction.

As illustrated in FIG. 2D, the individual transparent PET films 10 and 11 were peeled after the resin component was cured. In this way, a substrate made of a sheet-form solid ion conductor 1 was yielded.

As illustrated in FIG. 2E, a Mo₂C thin film was formed on one surface of the solid ion conductor 1 by sputtering. Specifically, Mo₂C was used as a target therefor. The power was 300 mW, the substrate rotating rate was 1.6 rpm, and the period for the sputtering process was 30 seconds. An argon atmosphere was made as an inert gas atmosphere. The gas flow rate was set to, for example, 20 cc/min.

According to the set values, a Mo₂C thin film, of about 20 nm thickness was formed on the target film. In this way, a catalyst layer 2 having a good catalytic performance was formed. When such a film is formed, the period for the sputtering process is preferably less than 90 seconds, and more preferably less than 60 seconds. In the sputtering, the DC and RF power values are not particularly limited, and are each desirably set to 1.2 W/cm² or more.

About the hydrogen gas sensor produced in Example 1, the kind of the gas was changed in accordance with the order of methane gas, carbon monoxide, and carbon dioxide. About each of the gases, the voltage was measured through the same steps as about hydrogen gas. However, about each of the gases, no output was permitted to be recognized.

From this result, it has been verified that about the hydrogen gas sensor according to the present embodiment, the output thereof is changed only by effect of hydrogen gas, and it has been made clear that the sensor is excellent in gas selectivity.

### [Embodiments 3]

Hereinafter, a description will be made about a hydrogen gas detecting device and method using the hydrogen gas sensor.

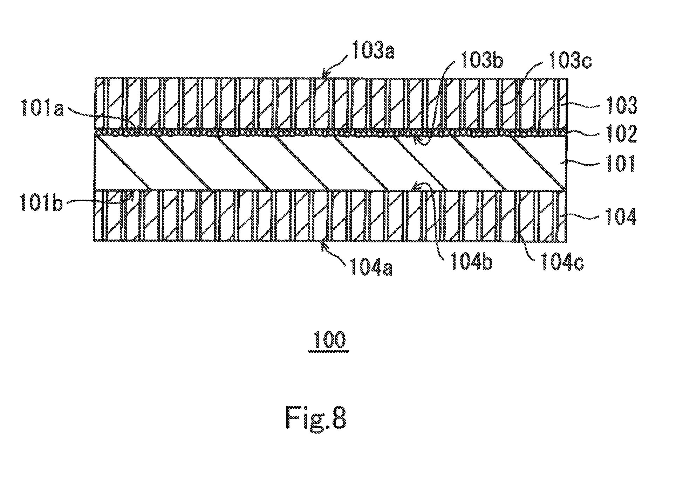

FIG. 8 is a sectional view illustrating the structure of a sensor head that is a part of the hydrogen gas detecting device, that is, the hydrogen gas sensor. In a sensor head 100, which is the head, a catalyst layer 102 is formed on a main surface 101a of a substrate 101 that is a solid ion conductor in a sheet form; an electrode 104 is arranged on a main surface 101b of the substrate 101; and further an electrode 103 is arranged on the catalyst layer 102.

Many pores 103c are made in the electrode 103 in order to cause gas in the atmosphere to flow from the main surface 103a to the main surface 103b. The same matter is applied also to the electrode 104. The material of these electrodes may be a metal material good in electroconductivity, for example, a copper nickel alloy thin film.

The pores 103c and pores 104c are not essential elements, and the electrodes may be those where the insides thereof have gas-flowing performance, and further the electrodes have good electroconductivity. Accordingly, the electrodes may each be constructed by, for example, carbon-containing fiber, such as carbon paper or carbon cloth, besides a porous metal-sintered body. Carbon paper, carbon cloth or the like is suitable for an electrode material since the paper or the like has a particularly good gas permeability together with electroconductivity.

The sensor head can operate even at normal temperature; thus, the head need not to be heated with a heater or the like, so that the device can be made small in size and low in costs.

Since a conventional sensor head using an oxide semiconductor responds to plural gases, it is necessary to select a combustible gas in accordance with the temperature. However, the sensor head according to the present invention responds specifically to hydrogen, so that hydrogen can be detected at normal temperature.

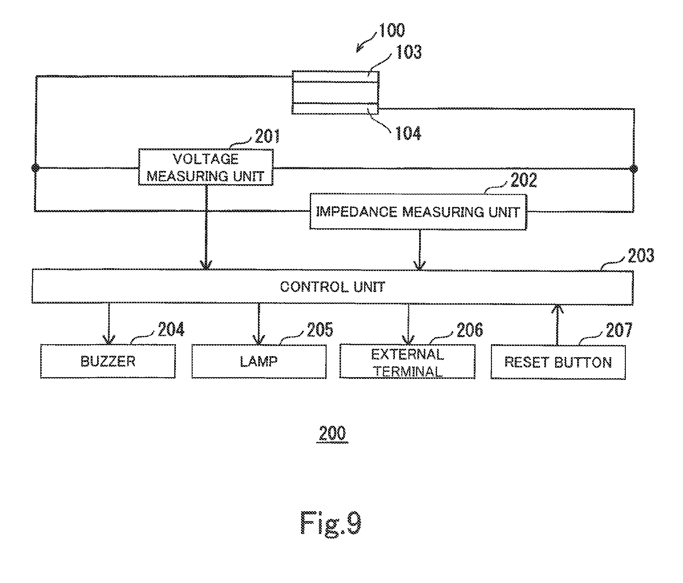

FIG. 9 is a diagram illustrating the system structure of the hydrogen gas detecting device according to the embodiment of the present invention.
A hydrogen gas detecting device 200 is equipped with the sensor head 100, a voltage measuring unit 201, an impedance measuring unit 202, a control unit 203, a buzzer 204, a lamp 205, an external terminal 206, and a reset button 207.

The voltage measuring unit 201 is inserted into an external interconnection for linking the electrodes 103 and 104 of the sensor head 100 to each other, and measures the inter-terminal voltage between the electrodes 103 and 104 of the sensor head 100.

The impedance measuring unit 202 is inserted into an external interconnection for linking the electrodes 103 and 104 of the sensor head 100 to each other, and measures the impedance of the substrate 101, which is proton conductive and is covered with the catalyst layer 102, from the electrodes 103 and 104 of the sensor head 100.

The control unit 203 detects a change in the concentration of hydrogen gas on the basis of measurement results of the voltage measuring unit 201 and measurement results of the impedance measuring unit 202. When the control unit 203 detects a change in the hydrogen gas concentration, the unit causes the buzzer 204 or the lamp 205 to operate, thereby attaining a hydrogen gas detection notification, and further outputs a signal to the outside through the external terminal 206, thereby attaining a hydrogen gas detection notification. The hydrogen gas detection notifications are stopped by pushing down the reset button 207.

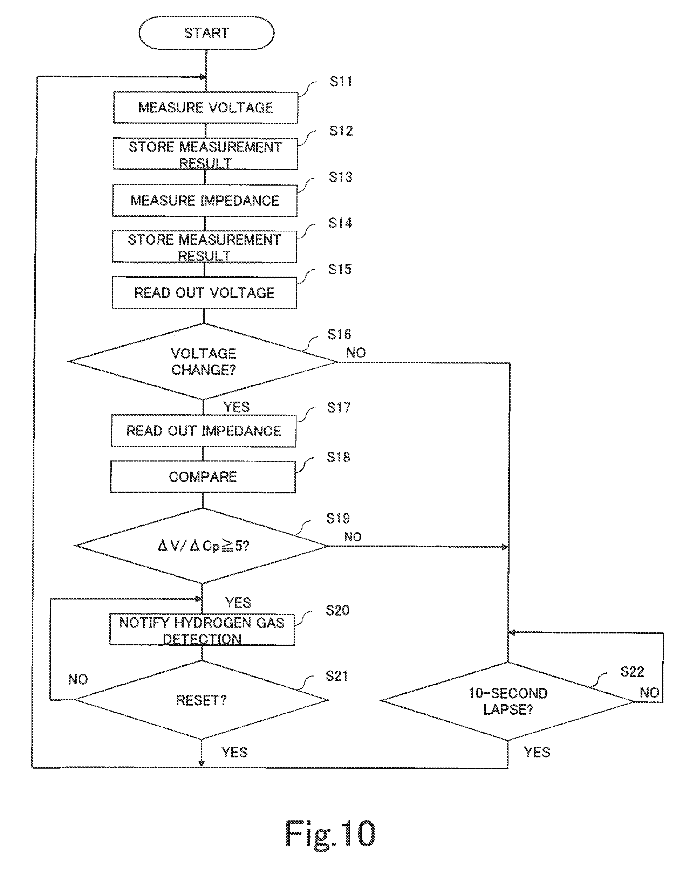

FIG. 10 is a flowchart showing the operation of the hydrogen gas detecting device.
The hydrogen gas detecting device 200 receives power supply as a trigger to start operation. As far as the power supply is not stopped, the device continues to operate.

Specifically, when the detection of hydrogen gas is notified in step S20 and then the reset button is operated in step S21, the program for the device is immediately returned to first step S11 to repeat hydrogen gas detection operation.

When it is decided that no voltage change is caused in step S16, or it is decided that the ratio between the impedance change rate and the voltage change rate, AV/ACp, is less than "5", which is a predetermined threshold value (hereinafter referred to as the "predetermined value") in step S19, the program waits for 10 seconds in step S22, and then the program is returned to first step S11 to repeat hydrogen gas detection operation.

For this reason, the measurement of the inter-terminal voltage in step S11 and that of the impedance in step S13 are each made at intervals of 10 seconds except a case where the detection of hydrogen gas is being notified. These measurement results are stored in a memory in steps S12 and S14. Its storing regions are secured to such a degree that at least plural measurement results can be stored therein.

An operation for the storage is controlled in a such a manner that the results are not overwritten but are written in new areas. As a result, at least measurement results of the inter-terminal voltage and those of the impedance obtained before 10 seconds are stored in the storing regions.

The following will describe the hydrogen gas detection operation in detail.
The hydrogen gas detecting device 200 receives power supply as a trigger to start operation. First, the inter-terminal voltage between the electrodes 103 and 104 of the sensor head 100 is measured (step S11), and the measurement result is stored in the memory (step S 12).

Next, the hydrogen gas detecting device 200 measures the impedance of the proton conductive substrate 101 covered with the catalyst layer 102 from the electrodes 103 and 104 of the sensor head 100 (step S13). The measurement result is stored in the memory (step S 14).

Next, the hydrogen gas detecting device 200 reads out the inter-terminal voltage measured last time and the inter-terminal voltage measured this time from the memory (step S15), and then it is decided whether or not a change in the voltage is caused (step S16).

Whether or not the voltage, chance is caused can be decided in accordance with, for example, whether or not the voltage change rate ΔV is the predetermined value or more. When the inter-terminal voltage measured, last time is represented by V1 and the inter-termmal voltage measured this time is represented by V2, the voltage change rate ΔV is defined as (|V2 - V1|)/V1.

When the voltage change is caused (step S16: YES), the hydrogen gas detecting device 200 reads out the impedance measured last time and the impedance measured this time from the memory (step S17), and then the ratio between the impedance change rate and the voltage change rate, ΔV/ΔCp, is compared with the predetermined value "5" (step S18).

When the impedance measured last time is represented by Cup 1 and the impedance measured this time is represented by Cp2, the impedance change rate ACp is defined as (|Cp2 - Cp1|)/Cp1.

When the ratio between the impedance change rate and the voltage change rate, AV/ACp, is the predetermined value "5" or more (step S19: YES), the hydrogen gas detecting device 200 decides that a change in the concentration of hydrogen gas is detected and then a hydrogen gas detection notification is made until the reset button is operated (step S20, and step S21:NO).

When the reset button is operated during the hydrogen gas detection notification (step S21 YES), the hydrogen gas detecting device 200 returns to the processing in step S11.

On the other hand, in a case where no voltage change is caused (step S16: NO), or the ratio between the impedance change rate and the voltage change rate, AV/ACp, is less than the predetermined value "5" even when the voltage change is caused (step S19: NO), the hydrogen gas detecting device 200 decides that no change in the concentration of hydrogen gas is caused. When a predetermined period of "10 seconds" elapses therefrom (step S22: YES), the device 200 returns to the processing in step S11.

According to such a flow, the hydrogen gas detecting device 200 decides whether or not the hydrogen gas concentration changes at intervals of the predetermined period of "10 seconds". When a change in the hydrogen gas concentration is detected, a hydrogen gas detection notification is made.

Herein, the predetermined value "5" and the predetermined period of "10 seconds" have been specifically described; however, these are mere examples. These set values are values designed appropriately in accordance with the specification of the hydrogen gas detecting device.

In order to confirm the performance of the hydrogen gas detecting device actually, the inventors produced a sample of the sensor head, and the produced sample was used to evaluate whether or not a change in the concentration of hydrogen gas was able to be detected with a good precision.

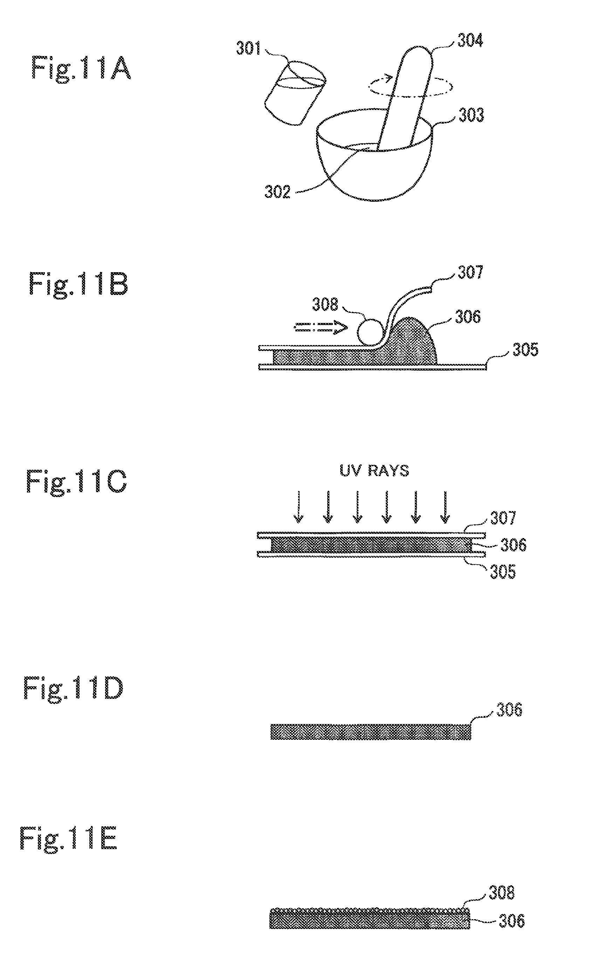

FIGs. 11 are views which schematically illustrate steps of producing the sample of the sensor head.
Prepared was first each of a pyrazolium salt as an ionic liquid; an epoxy acrylate resin (trade name: NEOPOL (registered trade name)) manufactured by Japan U-PiCA Co., Ltd. as a light (UV) curable resin; and a radical initiator (photopolymerization initiator) manufactured by DIC Corporation.

To 5 g of the prepared epoxy acrylate resin (reference number 302 in FIGs. 11) were added 0.5 mL of the ionic liquid and 0.14 g of the initiator (reference number 301 FIGs. 11). This was put into an agate mortar 303, and an agate pestle 304 was used to mix the components so as to make the mixture uniform (FIG. 11A). This blend ratio is an example.

After the end of the mixing, the mixed resin 306 was dropped onto a transparent ZEONOR film (registered trade name of Nippon Zeon Co., Ltd.) 305, and further another transparent ZEONOR film 307 was put thereon.
A pressure was applied to the workpiece from above the transparent ZEONOR film 307 by means of a bar coater (pressing rod) 308, so as to stretch the mixed resin 306 to give a thickness of about 100 µm (FIG. 11B).

Next, in the state that both the transparent ZEONOR films 305 and 307 were laminated onto the mixed resin 306, a mercury lamp (360 nm) was used to irradiate ultraviolet rays thereto from the outside to cause a photocuring reaction (FIG. 11C). After the resin component was cured, the transparent ZEONOR films 305 and 307 were peeled to yield a sheet of the cured mixed resin 306 (FIG. 11D).

Next, a catalyst layer 308 was formed on either one of main surfaces of the sufficiently cured mixed resin 306 by sputtering (FIG. 11E). Specifically, platinum Pt was used as a target therefor. The power was 300 mW, the rotating rate was 1.6 rpm, and the period for the sputtering process was 90 seconds. An argon atmosphere was made as an inert gas atmosphere. The gas flow rate was set to, for example, 20 cc/min.

Next, the sheet was cut into a disc having a diameter of 30 mm. Thereto were fitted doughnut-form washers made of stainless steel as electrodes.

The inventors used the sample of the sensor head, which was produced through the above-mentioned steps, to examine hydrogen gas concentration dependency about the inter-terminal voltage and the impedance of the sample.

The hydrogen gas concentration dependency can be examined, by using a syringe to blow hydrogen gas having each concentration onto the sample of the sensor head, and measuring the inter-terminal voltage and the impedance of the sample at this time.

The concentrations of the blown hydrogen gas were four concentrations of 0%, 4%, 50% and 100%. A digital MULTIMETER (measuring device MULTIMETER VOAC 7411 manufactured by Iwatsu Test Instruments Corp.) was used to measure the inter-terminal voltage of the sample, and a measuring device (HEWLETT PACKARD 4284A) was used to measure the impedance of the sample at 100 kHz. The temperature and humidity at the time of the measurements were 24°C and 49% RH, respectively.

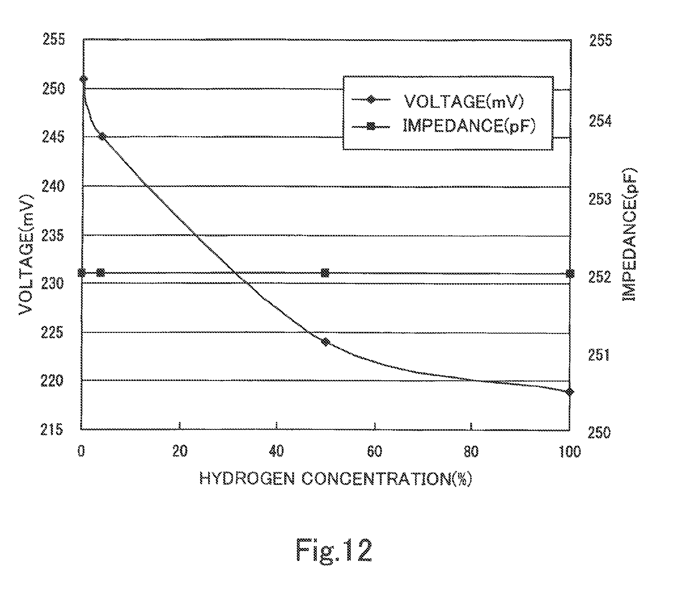

FIG. 12 is a graph showing measurement results of the voltage and the impedance when the hydrogen gases were blown to the sample of the sensor head 100.

According to the graph, it is understood that as the concentration of hydrogen gas is higher, the voltage becomes lower. This lowered voltage corresponds to the electromotive force of the sample. It is understood that the inter-terminal voltage depends on the concentration of hydrogen gas while the impedance hardly depends on the concentration of hydrogen gas.

According to this result, it appears that on the basis of the inter-terminal voltage, the hydrogen gas concentration can be specified into one value. As will be described later, however, the mter-terminal voltage depends on environmental factors so that the hydrogen gas concentration is not easily specified from only the inter-terminal voltage.

Next, the inventors made a performance-evaluation as to whether or not the hydrogen gas detecting device according to the embodiment can detect a change in the concentration of hydrogen gas without being affected by environmental factors.

Specifically, it was observed whether or not a change in the concentration of hydrogen gas was permitted to be properly detected under conditions that the hydrogen gas concentration in an atmosphere was changed from 8% to 4% at a timing while environmental factors of the atmosphere were changed with the passage of time.

The conditions are conditions set on the supposition that in a hydrogen energy system, a typical example of which is a fuel battery or a hydrogen engine, the leakage of hydrogen gas is generated to cause the gas concentration to reach the detonation limit (hydrogen gas component: 4%) at a certain time.

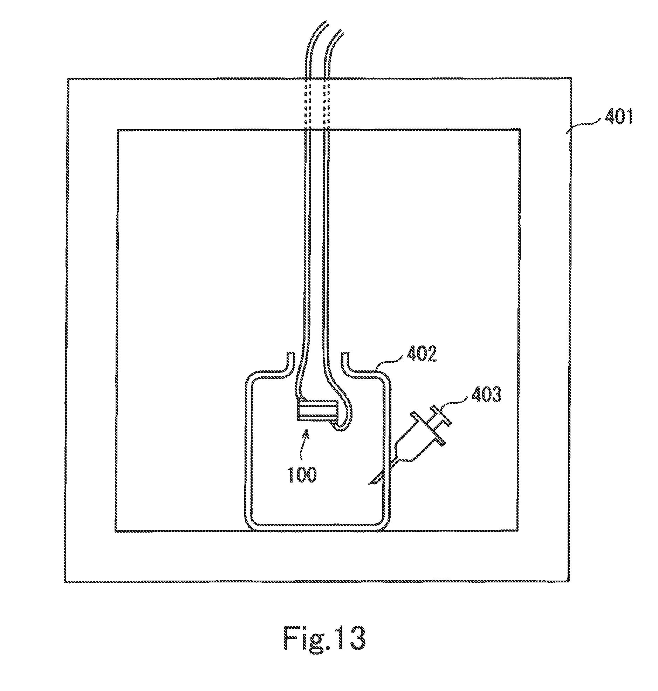

FIG. 13 is a view which schematically illustrates a part of an experimental system used for the performance-evaluation of the hydrogen gas detecting device according to the embodiment.

First, an environment test machine 401 capable of controlling environmental factors of temperature and humidity at will was prepared. A container 402 was put therein. Furthermore, the sensor head sample 100 produced through the above-mentioned steps was arranged therein.

The sample of the sensor head 100 was connected through two wiring lines to a digital MULTIMETER and an impedance measuring device outside the environment test machine 401.

A syringe 403 was set to the lower part of the container 402. The volume of the container 402 was 1 L, and 40 mL of hydrogen gas of 100% concentration was put in the syringe 403. Accordingly, when hydrogen gas was injected from the syringe 403 into the container 402, the hydrogen gas concentration in the container 402 turned 4%.

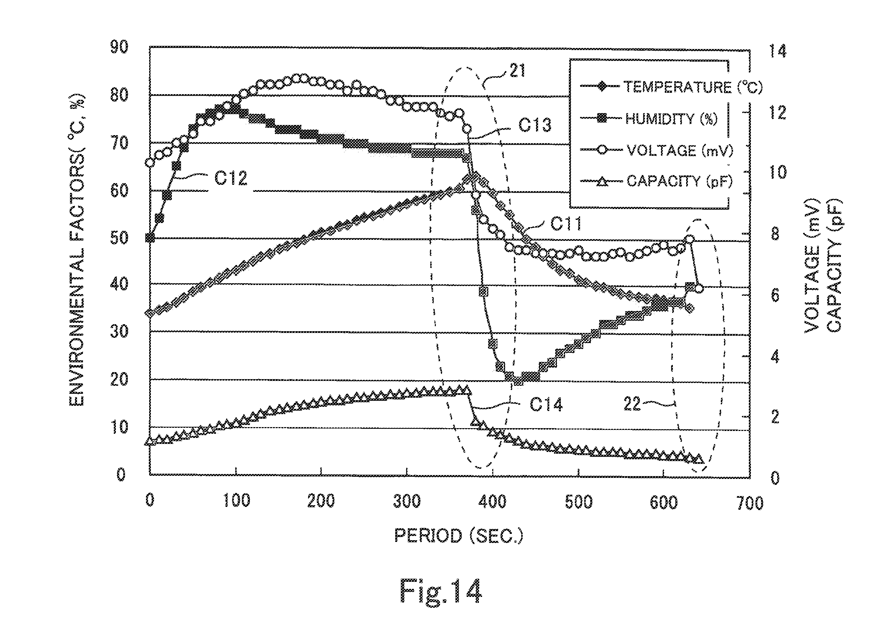

FIG. 14 is a graph wherein values of the temperature, the humidity, the voltage and the impedance at individual times are plotted.

Curves C11 and C12 show the measurement results of the temperature and those of the humidity, respectively. Curves C13 and C14 show the measurement results of the inter-terminal voltage, and those of the impedance, respectively. About the impedance of the sensor head 100, the capacity component thereof contributes mainly thereto; thus, the measurement results of the impedance are each converted to a capacity, and the capacity is shown.

From a time of 0 seconds to a time of 630 seconds, the hydrogen gas concentration in the container 402 was set to 0%. When 630 seconds elapsed (an area 22 in the graph), hydrogen gas was injected from the syringe 403 into the container 402, thereby setting the hydrogen gas concentration in the container 402 to 4%.

According to the graph, it is understood that about each of the inter-terminal voltage and the impedance, environmental factor dependency is expressed. In particular, in an area 21 where the environmental factors are largely changed, each of the inter-terminal voltage and the impedance is largely changed.

On the other hand, as illustrated in FIG. 12 also, the inter-terminal voltage exhibits dependency on the concentration of hydrogen gas while the impedance hardly exhibits dependency on the concentration of hydrogen gas. Accordingly, in the area 22, where the hydrogen gas concentration changes from 0% to 4%, the inter-terminal voltage is largely changed while the impedance is hardly changed.

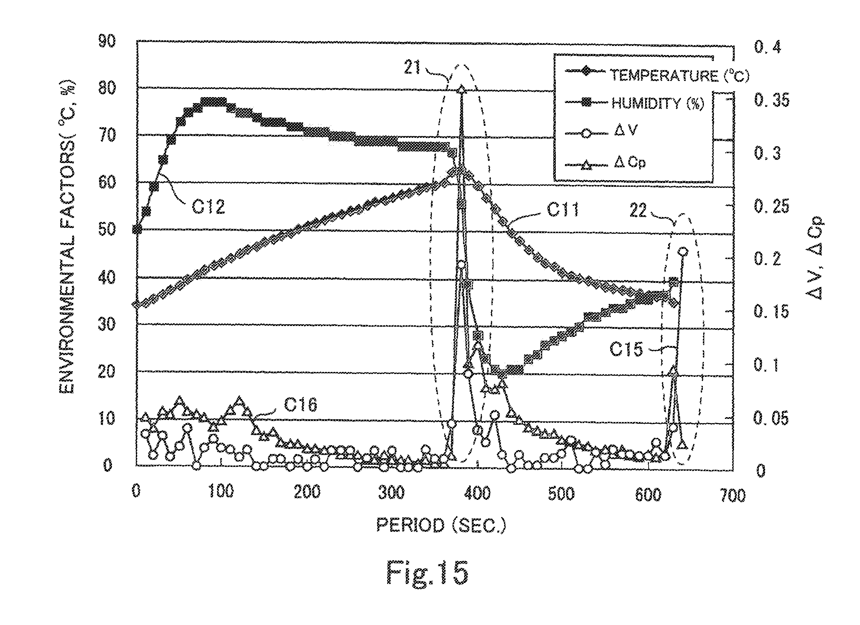

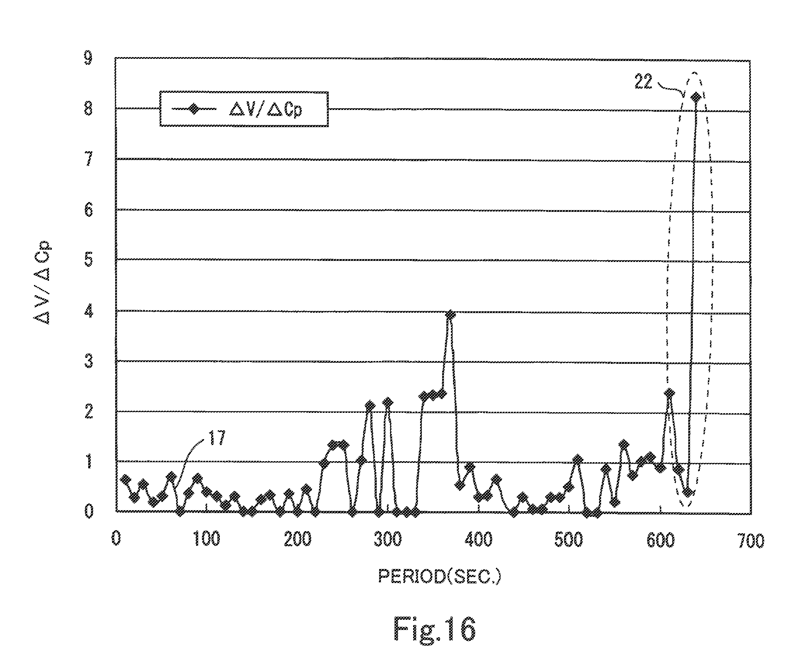

In order to show such a phenomenon more clearly, in FIG. 15 is shown a graph wherein values of the voltage change rate ΔV defined as (|V2 - V1|)/V1 and values of the impedance change rate ΔCp defined as (|Cp2-Cp1|)/Cp1 are plotted, and in FIG. 16 is shown a graph wherein values of the ratio ΔV/ΔCp, which is the ratio between the impedance change rate ΔCp defined as (|Cp2 - Cp1|)/Cp1 and the voltage change rate ΔV defined as (|V2 - V1|)/V1, are plotted.

FIG. 15 is a graph wherein values of the temperature, the humidity, the voltage change rate and the impedance change rate at individual times are plotted. A curve C11 represents the measurement results of the temperature; a curve C12, those of the humidity; a curve C15, those of the voltage change rate; and a curve C16, those of the impedance change rate.

FIG. 16 is a graph wherein values of the ratio between the impedance change rate and the voltage change rate at individual times are plotted.

The ratio ΔV/ΔCp between the impedance change rate and the voltage change rate is a somewhat, large value of "about 3.9" in an area where the environment factors are largely changed while in the area 22, where the hydrogen gas concentration is changed from 0 to 4%, the ratio is a particularly large value of "about 8.3".

According to this matter, by deciding whether or not the ratio AV/ACp between the impedance change rate and the voltage change rate is the predetermined value "5" or more, the following is attained: even when the inter-terminal voltage is changed by a change in the environmental factors, this voltage change is not wrongly judged as a change in the hydrogen gas concentration; thus, a change in the hydrogen gas concentration can be detected with a good precision.

Hereinafter, a description will be made about another embodiment of the hydrogen gas detecting device and the hydrogen gas detecting method.
In the above-mentioned embodiment, in order to obtain a change in the inter-terminal voltage relative to a change in the impedance characteristic, the ratio between the impedance change rate and the voltage change rate, ΔV/ΔCp, is calculated out. However, the difference between the impedance change rate and the voltage change rate (ΔV. ΔCp) may be calculated out.

In order to obtain a change in the inter-terminal voltage relative to a change in the impedance characteristic, it is allowable to calculate out the ratio between the impedance difference and the voltage difference, (|Cp2-Cp1|)/(|V2 - V1|), the ratio between the impedance arithmetic mean and the voltage arithmetic mean, (|Cp2 + Cp1|)/(|V2 + V1|), or the ratio between the impedance geometrical mean and the voltage geometrical mean, √(Cp2 × Cp1)/ √(V2 × V1).

In the above-mentioned embodiment, the impedance change rate ΔCp is defined as (|Cp2 - Cp1|)/Cp1, and the voltage change rate ΔV is defined as (|V2 - V1|)/V1. However, the impedance change rate ΔCp may be defined as (|Cp2 - Cp1|)/Cp2, and the voltage change rate ΔV may be defined as (|V2-V1|)V2.

When the measurement-time-interval from the measurement last time to that this time is represented by ΔT, the impedance change rate ΔCp may be defined as (|Cup2 - Cp1|)/ΔT, and the voltage change rate ΔV may be defined as (|V2 - V1|)/ΔT.

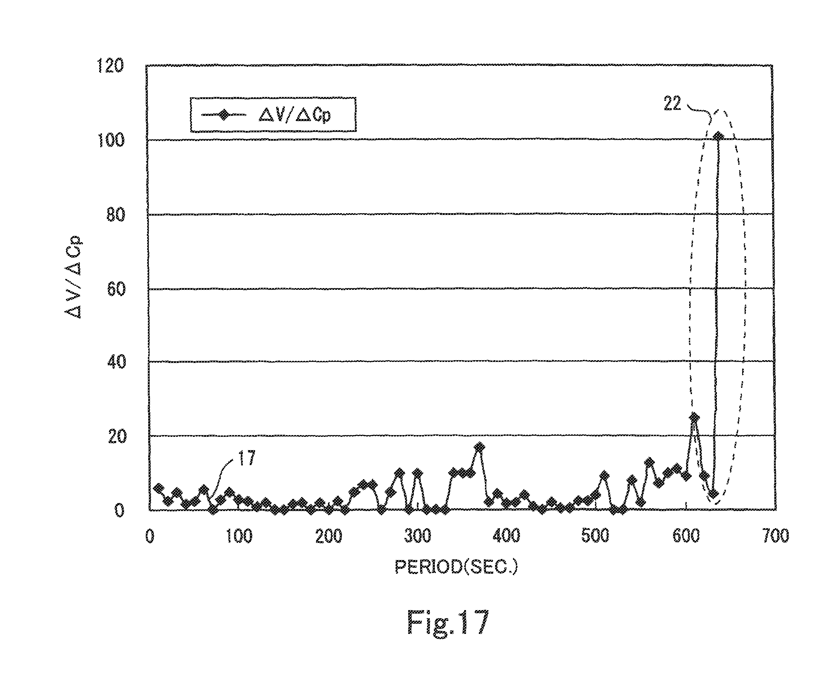

FIG. 17 is a graph in a case where the measurement-time-interval AT is used to define the impedance change rate and the voltage change rate in this way.

Specifically in FIG. 17 are plotted values of the ratio ΔV/ΔCp which is the ratio between the impedance change rate ΔCp defined as (|Cp2 - Cp1|)/ΔT and the voltage change rate ΔV defined as (|V2 - V1|)/ΔT,

According to the graph in FIG. 17, it is evident in the same manner as according to that in FIG. 16 that the following is attained: even when the inter-terminal voltage is changed by a change in the environmental factors, this voltage change is not wrongly judged as a change in the hydrogen gas concentration: thus, a change in the hydrogen gas concentration can be detected with a good precision.

In the above-mentioned embodiment, only when a change in the voltage is caused, the ratio ΔV/ΔCp between the impedance change rate and the voltage change rate is compared with the predetermined value "5". However, whether a change ill the voltage is caused or not, for example, the ratio ΔV/ΔCp between the impedance change rate and the voltage change rate may be compared with the predetermined value "5" whenever the hydrogen gas concentration is measured.

In the above-mentioned embodiment, the voltage change rate ΔV is calculated as an absolute value; thus, it is not decided whether the inter-terminal voltage rises or falls. However, by considering the direction of a change in the inter-terminal voltage, it may be detected whether the hydrogen gas concentration has been changed into a large or small value.

## Claims

1. A solid ion conductor, which is used in an electrochemical device, and is obtained by subjecting a mixture of an ionic liquid and a resin to curing treatment.

2. The solid ion conductor according to claim 1, which is obtained by mixing the ionic liquid with a photocurable resin, a thermosetting resin or a thermoplastic resin, and subsequently subjecting the mixture to the curing treatment.

3. The solid ion conductor according to claim 1 or 2, wherein the ionic liquid is a liquid having one or more cationic moieties selected from imidazolium based ions, pyridinium based ions, aliphatic amine based ions, alicyclic amine based ions and aliphatic phosphonium ions, and having one or more anionic moieties selected from halogen ions, halogen based ions, phosphonate based ions, boric acid based ions, triflate based ions, and imide based ions.

4. An electrochemical device, wherein a pair of electrodes are formed in the state that a solid ion conductor as recited in any one of claims 1 to 3 is sandwiched therebetween,

5. The electrochemical device according to claim 4, wherein an electrolytic salt containing an ion corresponding to the kinds of the electrodes is added to the solid ion conductor.

6. A process for producing an electrochemical device, comprising a mixing step of mixing an ionic liquid with a resin selected from a photocurable resin, a thermosetting resin and a thermoplastic resin, and stirring the mixture, a curing treatment step of curing the ion conductor subjected to the stirring and mixing treatment in the mixing step, and an electrode forming step of forming a pair of electrodes onto the ion conductor cured in the curing treatment step.

7. A hydrogen gas sensor, comprising a detecting unit wherein a catalyst layer is formed on at least one surface of a substrate formed by a solid ion conductor as recited in any one of claims 1 to 3.

8. The hydrogen gas sensor according to claim 7, wherein the detecting unit is jointed at electrodes having gas permeability.

9. The hydrogen gas sensor according to claim 7 or 8, wherein the catalyst layer is carried on at least one surface of the substrate, and is formed by a metal or alloy which is brought into contact with hydrogen gas to have a catalytic function, or an organic metal or organic material having a catalytic activity.

10. The hydrogen gas sensor according to claim 7 or 8, wherein the catalyst layer is carried on at least one surface of the substrate, and is formed by molybdenum carbide, which is brought into contact with hydrogen gas to have a catalytic function.

11. A process for producing a hydrogen gas sensor, comprising a mixing step of mixing an ionic liquid with a resin selected from a photocurable resin, a thermosetting resin and a thermoplastic resin, and stirring the mixture, a curing treatment step of curing the ion conductor subjected to the stirring and mixing treatment in the mixing step to form a substrate, and a catalyst layer forming step of forming a catalyst layer on at least one surface of the substrate cured in the curing treatment step.

12. A hydrogen gas detecting device, comprising a hydrogen gas sensor as recited in any one of claims 7 to 10, a voltage measuring unit for measuring the inter-terminal voltage of a pair of electrodes jointed to the detecting unit, an impedance measuring unit for measuring the impedance characteristic of the detecting unit, and a control unit for deciding that the concentration of hydrogen gas is changed when a change in the inter-terminal voltage measured by the voltage measuring unit relative to a change in the impedance characteristic measured by the impedance measuring unit is a predetermined value or more.

13. The hydrogen gas detecting device according to claim 12,
wherein the control unit stores the impedance characteristic measured by the impedance measuring unit and the mter-terminai voltage measured by the voltage measuring unit in a memory, calculates out a change in the impedance characteristic from the impedance characteristic measured last time and that measured this time, and calculates out a change in the inter-terminal voltage from the inter-terminal voltage measured last time and that measured this time.

14. The hydrogen gas detecting device according to claim 13,
wherein from the impedance change rate ACp and the voltage change rate ΔV represented by the following equations, respectively:
the impedance change rate: ΔCp = (|Cp2 - Cp1|)/Cp1, and
the voltage change rate ΔV = (|V2 - V1|)/V1
wherein CP1: the impedance value measured last time, Cp2: the impedance value measured this time, V1: the inter-terminal voltage value measured last time; and V2: the inter-terminal voltage value measured this time,
the control unit calculates out the ratio therebetween (ΔV/ΔCp) or the difference therebetween (ΔV - ACp) as a change in the inter-terminal voltage relative to a change in the impedance characteristic.

15. The hydrogen gas detecting device according to claim 13,
wherein from the impedance change rate ΔCp and the voltage change rate ΔV represented by the following equations, respectively:
the impedance change rate: ACp = (|Cp2 - Cp1|)/Cp1, and
the voltage change rate: ΔV = (|V2 - V1|)/V2
wherein CP1: the impedance value measured last time, Cp2: the impedance value measured this time, V1: the inter-terminal voltage value measured last time; and V2: the inter-terminal voltage value measured this time,
the control unit calculates out the ratio therebetween (ΔV/ΔCp) or the difference therebetween (ΔV - ΔCp) as a change in the inter-terminal voltage relative to a change in the impedance characteristic.

16. The hydrogen gas detecting device according to claim 13,
wherein from the impedance change rate ΔCp and the voltage change rate ΔV represented by the following equations, respectively:
the impedance change rate: ΔCp = (|Cp2 - Cp1|)/ΔT, and
the voltage change rate: ΔV = (|V2 - V1|)/ΔT
wherein CP1: the impedance value measured last time, Cp2: the impedance value measured this time, V1: the inter-terminal voltage value measured last time; V2: the inter-terminal voltage value measured this time; and ΔT: the period from the time when the impedance or voltage value is measured last time to the time when the value is measured this time,
the control unit calculates out the ratio therebetween (AV/ACp) or the difference therebetween (ΔV - ΔCp) as a change in the inter-terminal voltage relative to a change in the impedance characteristic.

17. The hydrogen gas detecting device according to claim 12, which further comprises a hydrogen gas detection notifying means for notifying hydrogen gas detection to the outside, wherein the control unit causes the hydrogen gas detection notifying means to notify a hydrogen gas detection when the control unit decides that the concentration of hydrogen gas is changed.

18. A hydrogen gas detecting method, using a hydrogen gas sensor as recited in any one of claims 7 to 10, comprising a voltage measuring step of measuring the inter-terminal voltage between a pair of electrodes jointed to the detecting unit,
an impedance measuring step of measuring the impedance characteristic of the detecting unit, and
a deciding step of deciding that the concentration of hydrogen gas is changed when a change in the inter-terminal voltage measured through the voltage measuring step relative to a change in the impedance characteristic measured through the impedance measuring step is a predetermined value or more.
